# EUROPEAN PATENT APPLICATION

(11) **EP 4 686 130 A1**
(43) Date of publication of application: **28.01.2026**
(21) Application number: 24773976.6
(22) Date of filing: 13.03.2024
(51) Int. Cl.: H04L 5/00

(54) **METHOD AND APPARATUS USED IN NODE FOR WIRELESS COMMUNICATION**

(30) Priority: 22.03.2023 CN 202310282061
(71) Applicant: Apogee Networks, LLC, Dallas, TX 75201 (US)
(72) Inventor: WU, Keying, Shanghai 201206 (CN); ZHANG, Xiaobo, Shanghai 201206 (CN)
(74) Representative: Gunzelmann, Rainer
(86) International application number: PCT/CN2024/081364
(87) International publication number: WO 2024/193410

(57) **Abstract**

Disclosed in the present application are a method and apparatus used in a node for wireless communication. A first node receives a first information block, wherein the first information block indicates a plurality of RS resources; the first information block is carried by higher-layer signaling; the first information block only supports indicating a plurality of RS resources having the same resource type; the resource type of one RS resource is related to at least one of the following:
- whether a cell associated with the RS resource is configured with a first parameter set,
- and a CSI reporting amount reported by CSI associated with the RS resource;
the first parameter set is used for determining at least one of a downlink receiving time and an uplink sending time; and a candidate of the CSI reporting amount comprises at least one of an L1-RSRP, an L1-SINR, a CRI, an SSBRI, an RI, a PMI, a CQI and an LI. The method has the advantages of improving system performance and flexibility, and simplifying a system design.

## Description

### Technical Field

The present application relates to a transmission method and apparatus in a wireless communication system, in particular to a scheme and apparatus related to a Multi-TRP (Multiple Transmission Reception Point) in a wireless communication system.

### Background Art

A multi-antenna technology is a key technology in a 3GPP (3rd Generation Partner Project) LTE (Long-term Evolution) system and an NR (New Radio) system. In a wireless communication system supporting a multi-antenna transmission, it is a common technology that UE (User Equipment) generates and reports CSI (Channel State Information) based on channel measurement or interference measurement to assist a base station in multi-antenna processing. Typical CSI includes, for example, at least one of a CRI (CSI-RS Resource Indicator), an RI (Rank Indicator), a PMI (Precoding Matrix Indicator), a CQI (Channel quality indicator), an L1-RSRP (Layer 1 reference signal received power), or an L1-SINR (Layer 1 signal-to-noise and interference ratio). Compared with LTE systems, NR systems support more advanced CSI reporting technologies, such as CSI reporting based on Type II codebooks. In R (release) 18, projects for CSI reporting based on AI (Artificial Intelligence)/ML (Machine Learning) and network energy saving were launched. Existing CSI reporting needs to be further enhanced to support these new technologies in R18.

### Summary of the Invention

The inventors have discovered through researches that an existing RS (Reference Signal) resource configuration needs to be further enhanced. In view of the above problem, the present application discloses a solution. It should be noted that, although the above description uses AI/ML-based CSI reporting and network energy saving as examples, the present application can also be applied to other scenarios, such as codebook-based CSI reporting and scenarios that do not support network energy saving. Furthermore, adopting a unified design for different scenarios (including but not limited to AI/ML-based CSI reporting, support for network energy saving, codebook-based CSI reporting, and scenarios that do not support network energy saving) is also helpful for reducing hardware complexity and costs.In the case of no conflict, embodiments and features in the embodiments in any node of the present application can be applied to any other node. In the case of no conflict, embodiments and features in the embodiments of the present application can be arbitrarily combined with each other.

As one embodiment, the interpretation of the terminologies in the present application is based on the definitions provided in the 3GPP specification protocol TS36 series.

As one embodiment, the interpretation of the terminologies in the present application is based on the definitions provided in the 3GPP specification protocol TS38 series.

As one embodiment, the interpretation of the terminologies in the present application is based on the definitions provided in the 3GPP specification protocol TS37 series.

As one embodiment, the interpretation of the terminologies in the present application refers to the definitions of the specification protocol of the Institute of Electrical and Electronics Engineers (IEEE).

The present application discloses a method used in a first node for wireless communication, characterized by comprising:
receiving a first information block, the first information block indicating a plurality of RS resources, and the first information block being carried by higher-layer signaling,
wherein the first information block only supports indicating the plurality of RS resources having the same resource type; the resource type of one RS resource is related to at least one of the following:
   - whether a cell associated with the RS resource is configured with a first parameter set,
   - and a CSI report quantity reported by CSI associated with the RS resource;
the first parameter set is used for determining at least one of a downlink receiving time or an uplink sending time; and a candidate of the CSI report quantity comprises at least one of an L1-RSRP, an L1-SINR, a CRI, an SSBRI, an RI, a PMI, a CQI, or an LI.

As one embodiment, how to indicate the plurality of RS resources in the first information block is a problem that needs to be solved.

As one embodiment, the above method solves this problem by limiting the first information block to only indicate the plurality of RS resources having the same resource type.

As one embodiment, benefits of the above method comprise: improving the system performance.

As one embodiment, benefits of the above method comprise: optimizing the signaling design, and saving the signaling overhead.

As one embodiment, benefits of the above method comprise: simplifying the system design.

As one embodiment, benefits of the above method comprise: having better backward compatibility.

According to one aspect of the present application, it is characterized in that the candidate of the CSI report quantity comprises a first-type report quantity, and the first-type report quantity comprises at least one of the following:
- channel state information recovered by a recipient based on the first-type report quantity received is unknown to the first node;
- a generator for generating the first-type report quantity is obtained based on training;
- and the first-type report quantity does not belong to CSI defined by 3GPP R17 or a previous version of 3GPP R17.

As one embodiment, benefits of the above method comprise: better supporting AI/ML-based CSI reporting.

According to one aspect of the present application, it is characterized in that a resource type of the plurality of RS resources is one of a first type or a second type, a CSI report quantity reported by CSI associated with an RS resource having a resource type of the first type comprises the first-type report quantity, and a CSI report quantity reported by CSI associated with an RS resource having a resource type of the second type does not comprise the first-type report quantity.

According to one aspect of the present application, it is characterized in that a resource type of the plurality of RS resources is one of a third type or a fourth type, a cell associated with an RS resource having a resource type of the third type is configured with the first parameter set, and a cell associated with an RS resource having a resource type of the fourth type is not configured with the first parameter set.

As one embodiment, benefits of the above method comprise: reducing network energy consumption.

According to one aspect of the present application, it is characterized in that the first parameter set is used for determining at least one of a time for monitoring a PDCCH or a time for sending a PUSCH.

According to one aspect of the present application, it is characterized in that each RS resource in the plurality of RS resources is one RS resource in K RS resources, and K is a positive integer greater than 1; and there are at least two RS resources having different resource types in the K RS resources.

As one embodiment, in a scenario where candidate RS resources have different resource types, how to indicate the plurality of RS resources in the first information block is a problem that needs to be solved.

As one embodiment, benefits of the above method comprise: the first node is configured with RS resources having different resource types as candidate RS resources, thereby improving the system flexibility and performance.

As one embodiment, benefits of the above method comprise: limiting an indication of RS resources having the same resource type in the first information block, and simplifying the UE operation and system design.

According to one aspect of the present application, it is characterized by comprising:
receiving the plurality of RS resources;
and sending a first CSI report,
wherein the plurality of RS resources are used for obtaining channel measurement for calculating the first CSI report.

According to one aspect of the present application, it is characterized in that the first node is user equipment.

According to one aspect of the present application, it is characterized in that the first node is a relay node.

The present application discloses a method used in a second node for wireless communication, characterized by comprising:
sending a first information block, the first information block indicating a plurality of RS resources, and the first information block being carried by higher-layer signaling,
wherein the first information block only supports indicating the plurality of RS resources having the same resource type; the resource type of one RS resource is related to at least one of the following:
   - whether a cell associated with the RS resource is configured with a first parameter set,
   - and a CSI report quantity reported by CSI associated with the RS resource;
the first parameter set is used for determining at least one of a downlink receiving time or an uplink sending time; and a candidate of the CSI report quantity comprises at least one of an L1-RSRP, an L1-SINR, a CRI, an SSBRI, an RI, a PMI, a CQI, or an LI.

According to one aspect of the present application, it is characterized in that the candidate of the CSI report quantity comprises a first-type report quantity, and the first-type report quantity comprises at least one of the following:
- channel state information recovered by a recipient based on the first-type report quantity received is unknown to a sender;
- a generator for generating the first-type report quantity is obtained based on training;
- and the first-type report quantity does not belong to CSI defined by 3GPP R17 or a previous version of 3GPP R17.

As one embodiment, the recipient refers to: the second node.

As one embodiment, the sender refers to: a sender of the first-type report quantity.

As one embodiment, the sender refers to: a sender of the CSI report quantity.

As one embodiment, the sender refers to: the first node.

According to one aspect of the present application, it is characterized in that a resource type of the plurality of RS resources is one of a first type or a second type, a CSI report quantity reported by CSI associated with an RS resource having a resource type of the first type comprises the first-type report quantity, and a CSI report quantity reported by CSI associated with an RS resource having a resource type of the second type does not comprise the first-type report quantity.

According to one aspect of the present application, it is characterized in that a resource type of the plurality of RS resources is one of a third type or a fourth type, a cell associated with an RS resource having a resource type of the third type is configured with the first parameter set, and a cell associated with an RS resource having a resource type of the fourth type is not configured with the first parameter set.

According to one aspect of the present application, it is characterized in that the first parameter set is used for determining at least one of a time for monitoring a PDCCH or a time for sending a PUSCH.

According to one aspect of the present application, it is characterized in that each RS resource in the plurality of RS resources is one RS resource in K RS resources, and K is a positive integer greater than 1; and there are at least two RS resources having different resource types in the K RS resources.

According to one aspect of the present application, it is characterized by comprising:
receiving a first CSI report,
wherein the plurality of RS resources are used for obtaining channel measurement for calculating the first CSI report.

According to one aspect of the present application, it is characterized in that the second node is a base station.

According to one aspect of the present application, it is characterized in that the second node is user equipment.

According to one aspect of the present application, it is characterized in that the second node is a relay node.

The present application discloses a first node for wireless communication, characterized by comprising:
a first processor receiving a first information block, the first information block indicating a plurality of RS resources, and the first information block being carried by higher-layer signaling,
wherein the first information block only supports indicating the plurality of RS resources having the same resource type; the resource type of one RS resource is related to at least one of the following:
   - whether a cell associated with the RS resource is configured with a first parameter set,
   - and a CSI report quantity reported by CSI associated with the RS resource;
the first parameter set is used for determining at least one of a downlink receiving time or an uplink sending time; and a candidate of the CSI report quantity comprises at least one of an L1-RSRP, an L1-SINR, a CRI, an SSBRI, an RI, a PMI, a CQI, or an LI.

The present application discloses a second node for wireless communication, characterized by comprising:
a second processor sending a first information block, the first information block indicating a plurality of RS resources, and the first information block being carried by higher-layer signaling,
wherein the first information block only supports indicating the plurality of RS resources having the same resource type; the resource type of one RS resource is related to at least one of the following:
   - whether a cell associated with the RS resource is configured with a first parameter set,
   - and a CSI report quantity reported by CSI associated with the RS resource;
the first parameter set is used for determining at least one of a downlink receiving time or an uplink sending time; and a candidate of the CSI report quantity comprises at least one of an L1-RSRP, an L1-SINR, a CRI, an SSBRI, an RI, a PMI, a CQI, or an LI.

As one embodiment, compared with a traditional solution, the present application has the following advantages:
improving the system performance and flexibility;
optimizing the signaling design; and saving the signaling overhead;
simplifying the system design;
and having good backward compatibility.

### Brief Description of the Drawings

Other features, purposes and advantages of the present application will become more apparent by reading the detailed description of non-limiting embodiments with reference to the following drawings:
FIG. 1 shows a flowchart of a first information block according to one embodiment of the present application;
FIG. 2 shows a schematic diagram of a network architecture according to one embodiment of the present application;
FIG. 3 shows a schematic diagram of an embodiment of a wireless protocol architecture of a user plane and a control plane according to one embodiment of the present application;
FIG. 4 shows a schematic diagram of a first communication device and a second communication device according to one embodiment of the present application;
FIG. 5 shows a schematic diagram of a transmission between a first node and a second node according to one embodiment of the present application;
FIG. 6 shows a schematic diagram of a first parameter set according to one embodiment of the present application;
FIG. 7 shows a schematic diagram of a first parameter set according to one embodiment of the present application;
FIG. 8 shows a schematic diagram of a candidate of a CSI report quantity according to one embodiment of the present application;
FIG. 9 shows a schematic diagram of a resource type of an RS resource according to one embodiment of the present application;
FIG. 10 shows a schematic diagram of a resource type of an RS resource according to one embodiment of the present application;
FIG. 11 shows a schematic diagram of a first parameter set according to one embodiment of the present application;
FIG. 12 shows a schematic diagram of K RS resources according to one embodiment of the present application;
FIG. 13 shows a schematic diagram of a plurality of RS resources and a first CSI report according to one embodiment of the present application;
FIG. 14 shows a structural block diagram of a processing device used in a first node according to one embodiment of the present application; and
FIG. 15 shows a structural block diagram of a processing device used in a second node according to one embodiment of the present application.

### Detailed Description of Embodiments

The technical solution of the present application will be further described in detail below in conjunction with the drawings. It should be noted that, in the case of no conflict, embodiments and features in the embodiments in the present application may be arbitrarily combined with each other.

### Embodiment 1

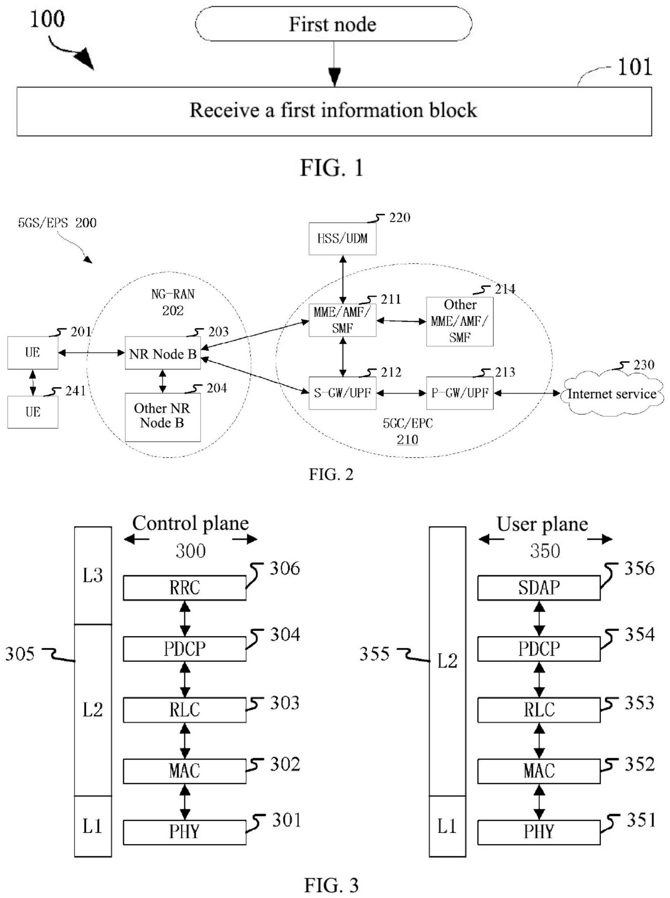

Embodiment 1 illustrates a flowchart of a first information block according to one embodiment of the present application, as shown in FIG. 1. In 100 shown in FIG. 1, each block represents one step.

In Embodiment 1, the first node in the present application receives a first information block in step 101, wherein the first information block indicates a plurality of RS resources, and the first information block is carried by higher-layer signaling; the first information block only supports indicating the plurality of RS resources having the same resource type; the resource type of one RS resource is related to at least one of the following:
- whether a cell associated with the RS resource is configured with a first parameter set,
- and a CSI report quantity reported by CSI associated with the RS resource;
the first parameter set is used for determining at least one of a downlink receiving time or an uplink sending time; and a candidate of the CSI report quantity comprises at least one of an L1-RSRP, an L1-SINR, a CRI, an SSBRI, an RI, a PMI, a CQI, or an LI.

As one embodiment, "the first information block only supports indicating the plurality of RS resources having the same resource type" refers to: the plurality of RS resources indicated by the first information block cannot have different resource types.

As one embodiment, "the first information block only supports indicating the plurality of RS resources having the same resource type" refers to: the first information block cannot indicate the plurality of RS resources having different resource types.

As one embodiment, "the first information block only supports indicating the plurality of RS resources having the same resource type" refers to: a sender of the first information block cannot indicate the plurality of RS resources having different resource types in the first information block.

As one embodiment, "the first information block only supports indicating the plurality of RS resources having the same resource type" refers to: a sender of the first information block does not have an ability to support that there are at least two RSs having different resource types in the plurality of RS resources.

As one embodiment, "the first information block only supports indicating the plurality of RS resources having the same resource type" refers to: a situation indicated by the first information block that there are at least two RSs having different resource types in the plurality of RS resources will not occur.

As one embodiment, "the first information block only supports indicating the plurality of RS resources having the same resource type" refers to: the first node does not expect that the plurality of RS resources comprise RS resources having different resource types.

As one embodiment, "the first information block only supports indicating the plurality of RS resources having the same resource type" refers to: the first node does not expect that any two RS resources in the plurality of RS resources have different resource types.

As one embodiment, "the first information block only supports indicating the plurality of RS resources having the same resource type" refers to: the first node assumes that the plurality of RS resources have the same resource type.

As one embodiment, "the first information block only supports indicating the plurality of RS resources having the same resource type" refers to: if there are two RS resources having different resource types in the plurality of RS resources, the first node considers it as an error.

As one embodiment, "the first information block only supports indicating the plurality of RS resources having the same resource type" refers to: if there are two RS resources having different resource types in the plurality of RS resources, the first node ignores the first information block.

As one embodiment, "the first information block only supports indicating the plurality of RS resources having the same resource type" refers to: the first node does not have an ability to support that there are two RS resources having different resource types in the plurality of RS resources.

As one embodiment, the higher layer refers to: a layer above the physical layer.

As one embodiment, the higher layer refers to: an RRC (Radio Resource Control) layer.

As one embodiment, the higher layer refers to: an MAC (Medium Access Control) layer.

As one embodiment, the higher layer comprises: an RRC layer.

As one embodiment, the higher layer comprises: an MAC layer.

As one embodiment, the higher-layer signaling refers to: RRC signaling.

As one embodiment, the higher-layer signaling refers to: an RRC IE (Information Element).

As one embodiment, the higher-layer signaling comprises: RRC signaling.

As one embodiment, the higher-layer signaling comprises: an RRC IE.

As one embodiment, the higher-layer signaling refers to: an MAC CE (Medium Access Control layer Control Element).

As one embodiment, the higher-layer signaling comprises: an MAC CE.

As one embodiment, the first information block comprises information in all or part of fields in one RRC IE.

As one embodiment, the first information block comprises all or part of information in at least one field in one RRC IE.

As one embodiment, the first information block comprises all or part of information in each RRC IE in a plurality of RRC IEs.

As one embodiment, the first information block comprises one RRC IE.

As one embodiment, the first information block comprises a plurality of RRC IEs.

As one embodiment, the first information block is one RRC IE.

As one embodiment, the first information block comprises an MAC CE.

As one embodiment, the first information block is jointly carried by RRC signaling and an MAC CE.

As one embodiment, the first information block is UE-specific.

As one embodiment, the first information block comprises all or part of information in a *CellGroupConfig* IE.

As one embodiment, the first information block comprises all or part of information in a *ServingCellConfig* IE.

As one embodiment, the first information block comprises all or part of information in a *CSI-MeasConfig* IE.

As one embodiment, the first information block comprises all or part of information in a *CSI-ReportConfig* IE.

As one embodiment, the first information block is one *CSI-ReportConfig* IE.

As one embodiment, the first information block comprises all or part of information in a *CSI-ResourceConfig* IE.

As one embodiment, the first information block is one *CSI-ResourceConfig* IE.

As one embodiment, the first information block comprises all or part of information in a *CSI-SSB-ResourceSet* IE.

As one embodiment, the first information block is one *CSI-SSB-ResourceSet* IE.

As one embodiment, the first information block comprises all or part of information in an *NZP-CSI-RS-ResourceSet* IE.

As one embodiment, the first information block is one *NZP-CSI-RS-ResourceSet* IE.

As one embodiment, the first information block comprises all or part of information in a *MeasObjectNR* IE.

As one embodiment, the first information block comprises all or part of information in a *MeasObjectToAddModList* IE.

As one embodiment, the first information block comprises all or part of information in a *MeasConfig* IE.

As one embodiment, the first information block comprises all or part of information in one RRC message.

As one embodiment, the first information block comprises all or part of information in each RRC message in a plurality of RRC messages.

As one embodiment, the first information block comprises all or part of information in an *RRCReconfiguration* message.

As one embodiment, the plurality of RS (Reference Signal) resources comprise a CSI-RS (Channel State Information-Reference Signal) resource.

As one embodiment, the plurality of RS resources comprise an NZP (non-zero-power) CSI-RS resource.

As one embodiment, the plurality of RS resources comprise an SS/PBCH (synchronisation signal/physical broadcast channel) block resource.

As one embodiment, any RS resource in the plurality of RS resources is one SS/PBCH block resource.

As one embodiment, any RS resource in the plurality of RS resources is one CSI-RS resource.

As one embodiment, any RS resource in the plurality of RS resources is one SS/PBCH block resource or CSI-RS resource.

As one embodiment, the first information block does not indicate an RS resource except the plurality of RS resources.

As one embodiment, the plurality of RS resources are RS resources indicated by the first information block.

As one embodiment, the plurality of RS resources comprise all RS resources indicated by the first information block.

As one embodiment, the first information block indicates at least one RS resource except the plurality of RS resources.

As one sub-embodiment of the above embodiment, the at least one RS resource is used for interference measurement.

As one embodiment, the first information block indicates that the plurality of RS resources are all used for channel measurement.

As one embodiment, the plurality of RS resources are RS resources indicated by the first information block for channel measurement.

As one embodiment, the plurality of RS resources comprise all RS resources indicated by the first information block for channel measurement.

As one embodiment, the first information block indicates an identifier of each RS resource in the plurality of RS resources.

As one embodiment, an identifier of any RS resource in the plurality of RS resources is NZP-CSI-RS-ResourceId or SSB-Index.

As one embodiment, an identifier of any RS resource in the plurality of RS resources comprises NZP-CSI-RS-ResourceId or SSB-Index.

As one embodiment, an identifier of any RS resource in the plurality of RS resources comprises an identifier of a cell associated with the RS resource.

As one embodiment, the first information block indicates a resource set to which each RS resource in the plurality of RS resources belongs.

As one embodiment, a resource set to which any RS resource in the plurality of RS resources belongs is a CSI-RS resource set or a CSI-SSB resource set.

As one embodiment, the plurality of RS resources belong to one identical resource set.

As one embodiment, there are two RS resources respectively belonging to different resource sets in the plurality of RS resources.

As one embodiment, the first information block indicates at least one resource set, and any RS resource in the plurality of RS resources belongs to one resource set in the at least one resource set.

As one embodiment, the first information block indicates the plurality of RS resources by indicating the at least one resource set.

As one embodiment, any resource set in the at least one resource set is one CSI-RS resource set or one CSI-SSB resource set.

As one embodiment, the at least one resource set only comprises one resource set.

As one embodiment, the at least one resource set comprises a plurality of resource sets.

As one embodiment, each resource set in the at least one resource set comprises at least one CSI-RS resource or at least one SS/PBCH block resource.

As one embodiment, the CSI-RS resource set refers to: an NZP CSI-RS resource set.

As one embodiment, one CSI-RS resource set is configured by one *NZP-CSI-RS-ResourceSet* IE.

As one embodiment, one CSI-RS resource set is identified by one NZP-CSI-RS-ResourceSetId.

As one embodiment, one CSI-SSB resource set is configured by one *CSI-SSB-ResourceSet* IE.

As one embodiment, one CSI-SSB resource set is identified by one CSI-SSB-ResourceSetId.

As one embodiment, the first information block indicates first CSI-ResourceConfig, and the first CSI-ResourceConfig indicates the plurality of RS resources.

As one embodiment, the first CSI-ResourceConfig indicates a first CSI-RS resource set, and the CSI-RS resource set includes part or all of RS resources in the plurality of RS resources.

As one embodiment, the first CSI-ResourceConfig indicates a first CSI-SSB resource set, and the first CSI-SSB resource set includes part or all of RS resources in the plurality of RS resources.

As one embodiment, the resource type of one RS resource is related to whether a cell associated with the RS resource is configured with the first parameter set.

As one embodiment, the resource type of one RS resource is related to only whether a cell associated with the RS resource is configured with the first parameter set of both of whether a cell associated with the RS resource is configured with the first parameter set and a CSI report quantity reported by CSI associated with the RS resource.

As one embodiment, the resource type of one RS resource is related to a CSI report quantity reported by CSI (Channel State Information) associated with the RS resource.

As one embodiment, the resource type of one RS resource is related to only a CSI report quantity reported by CSI associated with the RS resource of both of whether a cell associated with the RS resource is configured with the first parameter set and the CSI report quantity reported by the CSI associated with the RS resource.

As one embodiment, the resource type of one RS resource is related to a CSI report quantity reported by each piece of CSI associated with the RS resource.

As one embodiment, the resource type of one RS resource is related to a CSI report quantity reported by at least one piece of CSI associated with the RS resource.

As one embodiment, the resource type of one RS resource is related to both of whether a cell associated with the RS resource is configured with the first parameter set and a CSI report quantity reported by CSI associated with the RS resource.

As one embodiment, the resource type of one RS resource is related to both of whether a cell associated with the RS resource is configured with the first parameter set and a CSI report quantity reported by each piece of CSI associated with the RS resource.

As one embodiment, the resource type of one RS resource is related to both of whether a cell associated with the RS resource is configured with the first parameter set and a CSI report quantity reported by at least one piece of CSI associated with the RS resource.

As one embodiment, a cell associated with one RS resource refers to: a cell to which the one RS resource is configured.

As one embodiment, a cell associated with one RS resource refers to: a cell in which the one RS resource is transmitted.

As one embodiment, a cell associated with one RS resource refers to: a cell in which the one RS resource is located.

As one embodiment, a cell associated with one RS resource refers to: a cell identified by a PCI (Physical Cell Identifier) used for generating an SS sequence of the one RS resource, and the one RS resource is one SS/PBCH block resource.

As one embodiment, a cell associated with one RS resource refers to: a cell associated with an SS/PBCH block resource used for determining a quasi co-location relationship of the one RS resource; and the one RS resource is a CSI-RS resource.

As one embodiment, a quasi co-location source of any CSI-RS resource in the plurality of RS resources is one SS/PBCH block resource or another CSI-RS resource.

As one embodiment, if a quasi co-location source of one CSI-RS resource is one SS/PBCH block resource, an SS/PBCH block resource used for determining a quasi co-location relationship of the one CSI-RS resource refers to: the one SS/PBCH block resource as a quasi co-location source of the one CSI-RS resource.

As one embodiment, if a quasi co-location source of one CSI-RS resource is another CSI-RS resource, and a quasi co-location source of the another CSI-RS resource is one SS/PBCH block resource, an SS/PBCH block used for determining a quasi co-location relationship of the one CSI-RS resource refers to: the one SS/PBCH block as a quasi co-location source of the another CSI-RS resource.

As one embodiment, any RS resource in the K RS resources is one CSI-RS resource or one SS/PBCH block resource.

As one sub-embodiment of the above embodiment, a cell associated with one CSI-RS resource refers to: a cell associated with an SS/PBCH block resource used for determining a quasi co-location relationship of the one CSI-RS resource.

As one sub-embodiment of the above embodiment, a cell associated with one CSI-RS resource refers to: a cell associated with an SS/PBCH block resource as the quasi co-location source of the one CSI-RS resource, or refers to: a cell associated with an SS/PBCH block resource of a quasi co-location source as a quasi co-location source of the one CSI-RS resource.

As one sub-embodiment of the above embodiment, a cell associated with one SS/PBCH block resource refers to a cell identified by a PCI used for generating an SS (synchronization signal) sequence of the one SS/PBCH block resource.

As one sub-embodiment of the above embodiment, a cell associated with one SS/PBCH block resource refers to a cell identified by a PCI obtained from the one SS/PBCH block.

As one sub-embodiment of the above embodiment, a cell associated with one SS/PBCH block resource refers to a cell identified by a PCI undoubtedly obtained from the one SS/PBCH block.

As one embodiment, the quasi co-location source refers to: a quasi co-location source having a corresponding quasi co-location type including typeD.

As one embodiment, the meaning of a quasi co-location source of one RS resource refers to: the one RS resource and the quasi co-location source are quasi co-located.

As one embodiment, the meaning of a quasi co-location source of one RS resource refers to: the one RS resource and the quasi co-location source are quasi co-located, and a corresponding quasi co-location type includes TypeD.

As one embodiment, the SS sequence includes at least one of a PSS (Primary synchronization signal) sequence or an SSS (Secondary synchronization signal) sequence.

As one embodiment, the SS sequence includes a PSS sequence and an SSS sequence.

As one embodiment, one SS/PBCH block resource is used for obtaining time and frequency synchronization of a cell associated with the one SS/PBCH block resource.

As one embodiment, one SS/PBCH block resource is used for detecting a physical layer Cell ID of a cell associated with the one SS/PBCH block resource.

As one embodiment, one SS/PBCH block resource is used for detecting a PCI of a cell associated with the one SS/PBCH block resource.

As one embodiment, a PCI of a cell associated with the one SS/PBCH block resource can be obtained from an SS sequence of one SS/PBCH block.

As one embodiment, a PCI of a cell associated with the one SS/PBCH block resource can be undoubtedly obtained from an SS sequence of one SS/PBCH block.

As one embodiment, a cell associated with one RS resource in the plurality of RS resources is one serving cell of the first node.

As one embodiment, a cell associated with each RS resource in the plurality of RS resources is a serving cell of the first node.

As one embodiment, a cell associated with one RS resource in the plurality of RS resources is not a serving cell of the first node.

As one embodiment, a cell associated with one RS resource in the plurality of RS resources is not a PCell (Primary Cell) of the first node, and is neither configured with ServCellIndex nor configured with SCellIndex.

As one embodiment, a cell associated with each RS resource in the plurality of RS resources is not a serving cell of the first node.

As one embodiment, a cell associated with each RS resource in the plurality of RS resources is not a PCell of the first node, and is neither configured with ServCellIndex nor configured with SCellIndex.

As one embodiment, a cell associated with one RS resource in the plurality of RS resources is a serving cell of the first node, and a cell associated with another RS resource in the plurality of RS resources is not a serving cell of the first node.

As one embodiment, the serving cell refers to: one of a PCell, an SpCell (Special Cell), or an SCell (Secondary Cell).

As one embodiment, a cell associated with one RS resource in the plurality of RS resources is one cell waiting for being indicated as a serving cell.

As one embodiment, a cell associated with each RS resource in the plurality of RS resources is a cell waiting for being indicated as a serving cell.

As one embodiment, a cell associated with one RS resource in the plurality of RS resources is a serving cell of the first node, and a cell associated with another RSresource in the plurality of RS resources is one cell waiting for being indicated as a serving cell.

As one embodiment, the meaning of waiting for being indicated as a serving cell refers to: waiting for being dynamically indicated as a serving cell.

As one embodiment, the meaning of waiting for being indicated as a serving cell refers to: waiting for being indicated as a serving cell by one of DCI, an MAC CE or RRC signaling.

As one embodiment, the meaning of waiting for being indicated as a serving cell refers to: waiting for being indicated as a serving cell by an MAC CE.

As one embodiment, the meaning of waiting for being indicated as a serving cell refers to: waiting for being indicated as a serving cell by an MAC CE used for cell switching.

As one embodiment, the meaning of waiting for being indicated as a serving cell refers to: waiting for being indicated as a serving cell by a cell switch command.

As one embodiment, a cell associated with one RS resource in the plurality of RS resources is a cell indicated by a PDCCH order.

As one embodiment, a CSI report with which one RS resource is associated refers to: an RS resource used for channel measurement includes a CSI report of the one RS resource.

As one embodiment, a CSI report with which one RS resource is associated refers to: an RS resource used for channel measurement includes a CSI report of *CSI-ReportConfig* of the one RS resource.

As one embodiment, a CSI report with which one RS resource is associated refers to: an RS resource indicated by its higher-layer parameter *resourcesForChannelMeasurement* includes a CSI report of a *CSI-ReportConfig* IE of the one RS resource.

As one embodiment, calculation of a CSI report with which one RS resource is associated depends on channel measurement obtained based on the one RS resource.

As one embodiment, a CSI report with which one RS resource is associated refers to: a resource used for interference measurement includes a CSI report of the one RS resource.

As one embodiment, calculation of a CSI report with which one RS resource is associated depends on interference measurement obtained based on the one RS resource.

As one embodiment, candidates of the CSI report quantity comprise L1-RSRP (Layer 1-Reference Signal received power), an L1-SINR (Layer 1-Signal-to-Interference and Noise Ratio), a CRI (CSI-RS Resource Indicator), an SSBRI (SS/PBCH Block Resource Indicator), an RI (Rank Indicator), a PMI (Precoding Matrix Indicator), a CQI (Channel Quality Indicator), and an LI (Layer Indicator).

As one embodiment, candidates of the CSI report quantity further comprise at least one of CapabilityIndex or CapabilitySetIndex.

As one embodiment, candidates of the CSI report quantity comprise a CRI, an RI, a PMI, a CQI, and an LI.

As one embodiment, the first parameter set comprises at least one parameter.

As one embodiment, the first parameter set comprises only one parameter.

As one embodiment, the first parameter set comprises a plurality of parameters.

As one embodiment, the first parameter set is a higher-layer parameter.

As one embodiment, the first parameter set is configured by higher-layer signaling.

As one embodiment, the first parameter set is configured by RRC signaling.

As one embodiment, the first parameter set is configured by an RRC IE.

As one embodiment, the first parameter set is configured by dynamic signaling.

As one embodiment, the first parameter set is configured by an MAC CE.

As one embodiment, the first parameter set is configured by DCI (Downlink control information).

As one embodiment, one part of parameters in the first parameter set are configured by one RRC IE, and the other part of parameters are configured by another RRC IE.

As one embodiment, one part of parameters in the first parameter set are configured by higher-layer signaling, and the other part of parameters are configured by DCI.

As one embodiment, one part of parameters in the first parameter set are configured by RRC signaling, and the other part of parameters are configured by an MAC CE.

As one embodiment, one part of parameters in the first parameter set are configured by one MAC CE, and the other part of parameters are configured by another MAC CE.

As one embodiment, one part of parameters in the first parameter set are configured by one piece of DCI, and the other part of parameters are configured by another piece of DCI.

As one embodiment, a cell configured with the first parameter set supports network energy saving.

As one embodiment, a cell not configured with the first parameter set does not support network energy saving.

As one embodiment, features of the above method comprise: whether one cell is configured with the first parameter set is related to whether the cell supports network energy saving.

As one embodiment, whether a cell associated with the RS resource is configured with a first parameter set refers to: whether the first node is configured with the first parameter set on the cell associated with the RS resource.

As one embodiment, whether a cell associated with the RS resource is configured with a first parameter set refers to: whether signaling that carries parameters in the first parameter set is sent on the cell associated with the RS resource; and the signaling includes at least one of RRC signaling, an MAC CE, or DCI.

As one embodiment, whether a cell associated with the RS resource is configured with a first parameter set refers to: whether to support sending signaling in the cell associated with the RS resource to indicate parameters in the first parameter set; and the signaling includes at least one of RRC signaling, an MAC CE, or DCI.

As one embodiment, whether a cell associated with the RS resource is configured with a first parameter set refers to: whether the first parameter set is configured for the first node on the cell associated with the RS resource.

As one embodiment, whether a cell associated with the RS resource is configured with a first parameter set refers to: whether the first parameter set is configured for the cell associated with the RS resource.

As one embodiment, whether a cell associated with the RS resource is configured with a first parameter set refers to: whether the first node is configured to be used for the first parameter set of the cell associated with the RS resource.

As one embodiment, whether a cell associated with the RS resource is configured with a first parameter set refers to: whether the cell associated with the RS resource supports network energy saving.

As one embodiment, features of the above method comprise: the first parameter set is used for network energy saving.

As one embodiment, benefits of the above method comprise: better supporting network energy saving.

As one embodiment, benefits of the above method comprise: in a scenario where there are cells that support network energy saving and do not support network energy saving simultaneously, a configuration of the first information block is optimized, the signaling overhead is saved, and the processing of UE is simplified.

As one embodiment, the meaning of configuring a first parameter set includes: configuring through RRC signaling.

As one embodiment, the meaning of configuring a first parameter set includes: configuring through an MAC CE.

As one embodiment, the meaning of configuring a first parameter set includes: indicating through DCI.

As one embodiment, the first parameter set is used for determining a downlink receiving time.

As one embodiment, the first parameter set is used for determining an uplink sending time.

As one embodiment, the first parameter set is used for determining only a downlink receiving time in both the downlink receiving time and an uplink sending time.

As one embodiment, the first parameter set is used for determining only an uplink sending time in both a downlink receiving time and the uplink sending time.

As one embodiment, the first parameter set is used for determining a downlink receiving time and an uplink sending time.

As one embodiment, the first parameter set is used for dynamically determining a downlink receiving time.

As one embodiment, the first parameter set is used for dynamically determining an uplink sending time.

As one embodiment, the first parameter set is used for dynamically determining a downlink receiving time and an uplink sending time.

As one embodiment, the downlink receiving time comprises a time for receiving an SS/PBCH block.

As one embodiment, the downlink receiving time comprises a time for receiving an SS sequence.

As one embodiment, the downlink receiving time comprises a time for receiving an MIB (Master Information Block).

As one embodiment, the downlink receiving time comprises a time for receiving system information.

As one embodiment, the downlink receiving time comprises a time for receiving an SIB (System Information Block).

As one embodiment, the downlink receiving time comprises a time for receiving a CSI-RS.

As one embodiment, the downlink receiving time comprises a time for receiving an NZP CSI-RS.

As one embodiment, the downlink receiving time comprises a time for monitoring a PDCCH (Physical Downlink Control Channel).

As one embodiment, the downlink receiving time comprises a time for monitoring a PDCCH for a first-type RNTI (Radio Network Temporary Identifier).

As one embodiment, the downlink receiving time comprises a time for receiving an SPS (Semi-persistent scheduling) PDSCH (Physical downlink shared channel).

As one embodiment, the uplink sending time comprises a time for sending a PRACH (Physical Random Access Channel).

As one embodiment, the uplink sending time comprises a time for sending a PUSCH (Physical Uplink Shared Channel).

As one embodiment, the uplink sending time comprises a time for sending a PUSCH based on a configured grant.

As one embodiment, the uplink sending time comprises a time for sending a PUCCH (Physical Uplink Control Channel).

As one embodiment, the uplink sending time comprises a time for sending an SRS (Sounding reference signal).

As one embodiment, the uplink sending time comprises a time for sending a periodic and semi-persistent SRS.

As one embodiment, the uplink sending time comprises a time for sending an aperiodic SRS.

As one embodiment, the uplink sending time comprises a time for sending a CSI (Channel state information) report.

As one embodiment, the uplink sending time comprises a time for sending a periodic and quasi-static CSI report.

As one embodiment, the uplink sending time comprises a time for sending an aperiodic CSI report.

### Embodiment 2

Embodiment 2 illustrates a schematic diagram of a network architecture according to one embodiment of the present application, as shown in FIG. 2.

FIG. 2 illustrates a network architecture 200 of LTE (Long-Term Evolution), LTE-A (Long-Term Evolution Advanced), and future 5G systems. The network architecture 200 of the LTE, LTE-A, and future 5G systems is referred to as an EPS (Evolved Packet System) 200. The 5G NR or LTE network architecture 200 may be referred to as a 5GS (5G System)/EPS (Evolved Packet System) 200 or some other suitable terminologies. The 5GS/EPS200 may comprise one or more pieces of UE (User Equipment) 201, one piece of UE241 performing sidelink communication with UE201, an NG-RAN (Next Generation Radio Access Network) 202, a 5GC (5G CoreNetwork)/EPC (Evolved Packet Core) 210, an HSS (Home Subscriber Server)/UDM (Unified Data Management) 220, and an Internet service 230. The 5GS/EPS200 can be interconnected with other access networks, but for simplicity, these entities/interfaces are not shown. As shown in FIG. 2, the 5GS/EPS200 provides a packet switching service, but those skilled in the art will readily appreciate that various concepts presented throughout the present application may be extended to networks providing a circuit switching service. The NG-RAN202 comprises an NR (New Radio) Node B (gNB) 203 and other gNB204. The gNB203 provides user and control plane protocol termination toward the UE201. The gNB203 may be connected to the other gNB204 via an Xn interface (e.g., backhaul). The gNB203 may also be referred to as a base station, a base transceiver station, a radio base station, a radio transceiver, a transceiver function, a basic service set (BSS), an extended service set (ESS), a TRP (transmitter receiver point), or some other suitable terminologies. The gNB203 provides an access point to the 5GC/EPC210 for the UE201. Examples of the UE201 comprise a cellular phone, a smart phone, a session initiation protocol (SIP) phone, a laptop, a personal digital assistant (PDA), a satellite radio, a global positioning system, a multimedia apparatus, a video device, a digital audio player (e.g., an MP3 player), a camera, a game console, a drone, an aircraft, a narrowband physical network device, a machine type communication device, a land vehicle, a car, a wearable device, or any other similar functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB203 is connected to the 5GC/EPC210 through an S1/NG interface. The 5GC/EPC210 comprises an MME (Mobility Management Entity)/AMF (Authentication Management Field)/SMF (Session Management Function) 211, other MME/AMF/SMF214, an S-GW (Service Gateway)/UPF (User Plane Function) 212, and a P-GW (Packet Data Network Gateway)/UPF213. The MME/AMF/SMF211 is a control node that handles signaling between the UE201 and the 5GC/EPC210. Generally, the MME/AMF/SMF211 provides bearer and connection management. All user IP (Internet Protocol) packets are transmitted through the S-GW/UPF212, and the S-GW/UPF212 itself is connected to the P-GW/UPF213. The P-GW provides UE IP address allocation and other functions. The P-GW/UPF213 is connected to the Internet service 230. The Internet service 230 comprises operator-corresponding Internet protocol services, which may specifically comprise Internet, intranet, an IMS (IP Multimedia Subsystem), and packet switching services.

As one embodiment, the first node in the present application comprises the UE201.

As one embodiment, the second node in the present application comprises the gNB203.

As one embodiment, a wireless link between the UE201 and the gNB203 comprises a cellular network link.

As one embodiment, a sender of the first information block comprises the gNB203.

As one embodiment, a recipient of the first information block comprises the UE201.

As one embodiment, the UE201 supports network Energy Saving.

As one embodiment, the UE201 supports cell DRX and/or cell DTX.

As one embodiment, the UE201 supports dynamic adjustment of a spacial element.

As one embodiment, the gNB203 supports network Energy Saving.

As one embodiment, the gNB203 supports cell DRX and/or cell DTX.

As one embodiment, the gNB203 supports dynamic adjustment of a spacial element.

As one embodiment, the UE201 supports AI/ML-based CSI compression and reporting.

As one embodiment, the UE201 supports generating a CSI report using a model generator obtained by training.

As one embodiment, the gNB203 supports decompressing CSI using AI or ML.

### Embodiment 3

Embodiment 3 illustrates a schematic diagram of an embodiment of a wireless protocol architecture of a user plane and a control plane according to one embodiment of the present application, as shown in FIG. 3.

Embodiment 3 shows a schematic diagram of an embodiment of a wireless protocol architecture of one user plane and one control plane according to the present application, as shown in FIG. 3. FIG. 3 is a schematic diagram illustrating an embodiment of a radio protocol architecture for a user plane 350 and a control plane 300. FIG. 3 shows the radio protocol architecture of the control plane 300 used between a first communication node device (UE, a gNB, or an RSU in V2X) and a second communication node device (a gNB, UE, or an RSU in V2X), or between two pieces of UE using three layers: Layer 1, Layer 2, and Layer 3. The Layer 1 (L1 layer) is the lowest layer and implements various PHY (physical layer) signal processing functions. The L1 layer will be referred to as PHY301 herein. The Layer 2 (L2 layer) 305 is above the PHY301, and is responsible for a link between the first communication node device and the second communication node device, or between two pieces of UE. The L2 layer 305 comprises an MAC (Medium Access Control) sublayer 302, an RLC (Radio Link Control) sublayer 303, and a PDCP (Packet Data Convergence Protocol) sublayer 304, these sublayers terminating at the second communication node device. The PDCP sublayer 304 provides multiplexing between different radio bearers and logical channels. The PDCP sublayer 304 also provides security by encrypting data packets, and provides handover support for the first communication node device between the second communication node devices. The RLC sublayer 303 provides segmentation and reassembling of upper layer data packets, retransmission of lost data packets, and reordering of data packets to compensate for out-of-order reception due to HARQ. The MAC sublayer 302 provides multiplexing between logical channels and transport channels. The MAC sublayer 302 is also responsible for allocating various radio resources (e.g., resource blocks) in one cell between the first communication node devices. The MAC sublayer 302 is also responsible for HARQ operations. An RRC (Radio Resource Control) sublayer 306 in Layer 3 (L3 layer) in the control plane 300 is responsible for acquiring radio resources (i.e., radio bearers) and configuring a lower layer using RRC signaling between the second communication node device and the first communication node device. The radio protocol architecture for the user plane 350 comprises the Layer 1 (L1 layer) and the Layer 2 (L2 layer). The radio protocol architecture for the first communication node device and the second communication node device in the user plane 350 is substantially the same as corresponding layers and sublayers in the control plane 300 for the physical layer 351, the PDCP sublayer 354 in the L2 layer 355, the RLC sublayer 353 in the L2 layer 355, and the MAC sublayer 352 in the L2 layer 355, but the PDCP sublayer 354 also provides header compression for upper layer data packets to reduce radio transmission overhead. The L2 layer 355 in the user plane 350 also comprises an SDAP (Service Data Adaptation Protocol) sublayer 356, and the SDAP sublayer 356 is responsible for mapping between a QoS stream and a data radio bearer (DRB) to support the diversity of services. Although not shown in the figure, the first communication node device may have several upper layers above the L2 layer 355, including a network layer (e.g., an IP layer) terminating at a P-GW on a network side and an application layer terminating at another end (e.g., remote UE, a server, etc.) of connection.

As one embodiment, the wireless protocol architecture in FIG. 3 is applicable to the first node in the present application.

As one embodiment, the wireless protocol architecture in FIG. 3 is applicable to the second node in the present application.

As one embodiment, the first information block is generated in the RRC sublayer 306.

As one embodiment, the first information block is generated in the MAC sublayer 302 or the MAC sublayer 352.

As one embodiment, the first CSI report is generated in the PHY301 or the PHY351.

As one embodiment, an RS in the plurality of RS resources is generated in the PHY301 or the PHY351.

As one embodiment, the higher layer in the present application refers to a layer above a physical layer.

### Embodiment 4

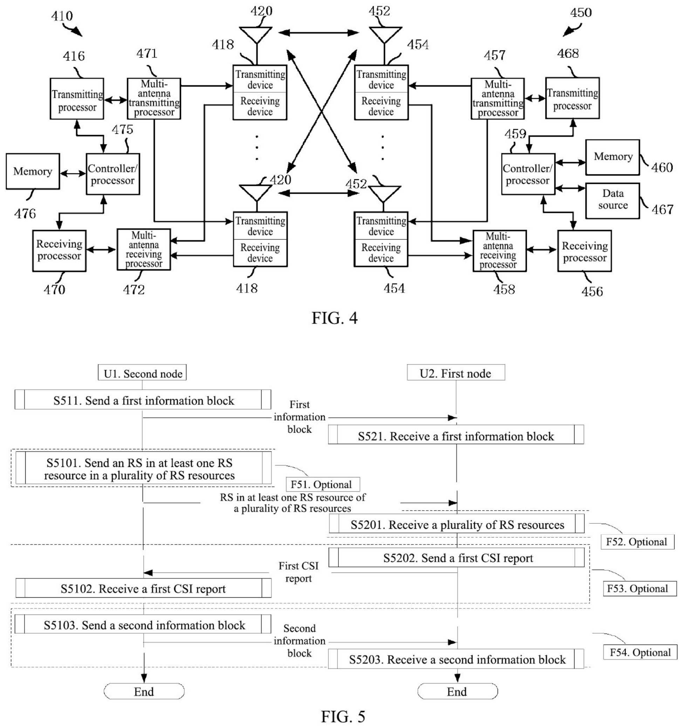

Embodiment 4 illustrates a schematic diagram of a first communication device and a second communication device according to one embodiment of the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In a transmission from the first communication device 410 to the second communication device 450, at the first communication device 410, an upper layer data packet from a core network is provided to the controller/processor 475. The controller/processor 475 implements the functionality of the L2 layer. In a DL, the controller/processor 475 provides header compression, encryption, packet segmentation and reordering, multiplexing between logical and transport channels, and radio resource allocation to the second communication device 450 based on various priority metrics. The controller/processor 475 is also responsible for HARQ operations, retransmission of lost packets, and signaling to the second communication device 450. The transmitting processor 416 and the multi-antenna transmitting processor 471 implement various signal processing functions for the L1 layer (i.e., physical layer). The transmitting processor 416 implements coding and interleaving to facilitate forward error correction (FEC) at the second communication device 450, as well as constellation mapping based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, including codebook-based precoding and non-codebook-based precoding, and beamforming processing on coded and modulated symbols to generate one or more parallel streams. The transmitting processor 416 then maps each parallel stream to a subcarrier, multiplexes the modulated symbols with a reference signal (e.g., pilot) in a time domain and/or a frequency domain, and then uses an inverse fast Fourier transform (IFFT) to generate a physical channel carrying a time domain multi-carrier symbol stream. The multi-antenna transmitting processor 471 then performs sending analog precoding/beamforming operations on the time domain multi-carrier symbol stream. Each transmitting device 418 converts a baseband multi-carrier symbol stream provided by the multi-antenna transmitting processor 471 into a radio frequency stream, and then provides it to different antennas 420.

In the transmission from the first communication device 410 to the second communication device 450, at the second communication device 450, each receiving device 454 receives a signal through its corresponding antenna 452. Each receiving device 454 recovers information modulated onto a radio frequency carrier, converts a radio frequency stream into a baseband multi-carrier symbol stream, and provides it to the receiving processor 456. The receiving processor 456 and the multi-antenna receiving processor 458 implement various signal processing functions of the L1 layer. The multi-antenna receiving processor 458 performs receiving analog precoding/beamforming operations on the baseband multi-carrier symbol stream from the receiving device 454. The receiving processor 456 uses a fast Fourier transform (FFT) to convert the baseband multi-carrier symbol stream subjected to the receiving analog precoding/beamforming operations from the time domain to the frequency domain. In the frequency domain, a physical layer data signal and a reference signal are demultiplexed by the receiving processor 456, wherein the reference signal will be used for channel estimation, and the data signal undergoes multi-antenna detection in the multi-antenna receiving processor 458 to recover any parallel stream destined for the second communication device 450. The symbols on each parallel stream are demodulated and recovered in the receiving processor 456, and soft decisions are generated. The receiving processor 456 then decodes and deinterleaves the soft decisions to recover upper layer data and control signals transmitted by the first communication device 410 on the physical channel. The upper layer data and control signals are then provided to the controller/processor 459. The controller/processor 459 implements functions of the L2 layer. The controller/processor 459 may be associated with the memory 460 that stores a program code and data. The memory 460 may be referred to as computer-readable media. In a DL, the controller/processor 459 provides demultiplexing between transport channels and logical channels, packet reassembly, decryption, header decompression, and control signal processing to recover the upper-layer data packet from the core network. Subsequently, the upper-layer data packet is provided to all protocol layers above the L2 layer. Various control signals may also be provided to the L3 for L3 processing. The controller/processor 459 is also responsible for error detection using an acknowledgement (ACK) and/or negative acknowledgement (NACK) protocol to support HARQ operations.

In a transmission from the second communication device 450 to the first communication device 410, at the second communication device 450, the upper layer data packets are provided to the controller/processor 459 using the data source 467. The data source 467 represents all protocol layers above the L2 layer. Similar to a transmission function at the first communication device 410 described in the DL, the controller/processor 459 implements header compression, encryption, packet segmentation and reordering, and multiplexing between logical and transport channels based on the radio resource allocation of the first communication device 410, and implements L2 layer functions for the user plane and the control plane. The controller/processor 459 is also responsible for HARQ operations, retransmission of lost packets, and signaling to the first communication device 410. The transmitting processor 468 performs modulation mapping and channel coding processing, and the multi-antenna transmitting processor 457 performs digital multi-antenna spatial precoding, including codebook-based precoding and non-codebook-based precoding, and beamforming processing. Then, the transmitting processor 468 modulates the generated parallel stream into a multi-carrier/single-carrier symbol stream, which is provided to different antennas 452 via the transmitting device 454 after analog precoding/beamforming operations in the multi-antenna transmitting processor 457. Each transmitting device 454 first converts the baseband symbol stream provided by the multi-antenna transmitting processor 457 into a radio frequency symbol stream, and then provides it to the antenna 452.

In the transmission from the second communication device 450 to the first communication device 410, a function at the first communication device 410 is similar to a receiving function at the second communication device 450 described in the transmission from the first communication device 410 to the second communication device 450. Each receiving device 418 receives a radio frequency signal through its corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement functions of the L1 layer. The controller/processor 475 implements functions of the L2 layer. The controller/processor 475 may be associated with the memory 476 that stores a program code and data. The memory 476 may be referred to as computer-readable media. The controller/processor 475 provides demultiplexing, packet reassembly, decryption, header decompression, and control signal processing between transport and logical channels to recover upper layer data packets from the second communication device 450. The upper layer data packets from the controller/processor 475 can be provided to the core network. The controller/processor 475 is also responsible for error detection using the ACK and/or NACK protocol to support HARQ operations.

As one embodiment, the second communication device 450 comprises: at least one processor and at least one memory, wherein the at least one memory comprises a computer program code; and the at least one memory and the computer program code are configured to be used together with the at least one processor. The second communication device 450 apparatus at least receives the first information block. The first information block indicates a plurality of RS resources, and the first information block is carried by higher-layer signaling; the first information block only supports indicating a plurality of RS resources having the same resource type; the resource type of one RS resource is related to at least one of the following:
- whether a cell associated with the RS resource is configured with a first parameter set,
- and a CSI report quantity reported by CSI associated with the RS resource;
the first parameter set is used for determining at least one of a downlink receiving time or an uplink sending time; and a candidate of the CSI report quantity comprises at least one of an L1-RSRP, an L1-SINR, a CRI, an SSBRI, an RI, a PMI, a CQI, or an LI.

As one embodiment, the second communication device 450 comprises: a memory storing a computer-readable instruction program, wherein the computer-readable instruction program generates actions when executed by at least one processor, and the actions comprise receiving the first information block.

As one embodiment, the first communication device 410 comprises: at least one processor and at least one memory, wherein the at least one memory comprises a computer program code; and the at least one memory and the computer program codes are configured to be used together with the at least one processor. The first communication device 410 apparatus at least sends the first information block. The first information block indicates a plurality of RS resources, and the first information block is carried by higher-layer signaling; the first information block only supports indicating a plurality of RS resources having the same resource type; the resource type of one RS resource is related to at least one of the following:
- whether a cell associated with the RS resource is configured with a first parameter set,
- and a CSI report quantity reported by CSI associated with the RS resource;
the first parameter set is used for determining at least one of a downlink receiving time or an uplink sending time; and a candidate of the CSI report quantity comprises at least one of an L1-RSRP, an L1-SINR, a CRI, an SSBRI, an RI, a PMI, a CQI, or an LI.

As one embodiment, the first communication device 410 comprises: a memory storing a computer-readable instruction program, wherein the computer-readable instruction program generates actions when executed by at least one processor, and the actions comprise: sending the first information block.

As one embodiment, the first node in the present application comprises the second communication device 450.

As one embodiment, the second node in the present application comprises the first communication device 410.

As one embodiment, at least one of {the antenna 452, the receiving device 454, the receiving processor 456, the multi-antenna receiving processor 458, the controller/processor 459, the memory 460, and the data source 467} is used for receiving the first information block; and at least one of {the antenna 420, the transmitting device 418, the transmitting processor 416, the multi-antenna transmitting processor 471, the controller/processor 475, and the memory 476} is used for sending the first information block.

As one embodiment, at least one of {the antenna 452, the receiving device 454, the receive processor 456, the multi-antenna receiving processor 458, the controller/processor 459, the memory 460, and the data source 467} is used for receiving the plurality of RS resources.

As one embodiment, at least one of {the antenna 420, the transmitting device 418, the transmitting processor 416, the multi-antenna transmitting processor 471, the controller/processor 475, and the memory 476} is used for sending an RS in at least one RS resource in the plurality of RS resources.

As one embodiment, at least one of {the antenna 420, the receiving device 418, the receiving processor 470, the multi-antenna receiving processor 472, the controller/processor 475, and the memory 460} is used for receiving the first CSI report; and at least one of {the antenna 452, the transmitting device 454, the transmitting processor 468, the multi-antenna transmitting processor 457, the controller/processor 459, the memory 467, and the data source 476} is used for sending the first CSI report.

### Embodiment 5

Embodiment 5 illustrates a flowchart of a transmission according to one embodiment of the present application; as shown in FIG. 5. In FIG. 5, a second node U1 and a first node U2 are communication nodes conducting transmissions by an air interface. In FIG. 5, the steps in blocks F51 to F54 are respectively optional.

For the second node U1, a first information block is sent in step S511; an RS is sent in at least one RS resource in a plurality of RS resources in step S5101; a first CSI report is received in step S5102; and a second information block is sent in step S5103.

For the first node U2, a first information block is received in step S521; a plurality of RS resources are received in step S5201; a first CSI report is sent in step S5202; and a second information block is received in step S5203.

In Embodiment 5, the first information block indicates the plurality of RS resources, and the first information block is carried by higher-layer signaling; the first information block only supports indicating the plurality of RS resources having the same resource type; the resource type of one RS resource is related to at least one of the following:
- whether a cell associated with the RS resource is configured with a first parameter set,
- and a CSI report quantity reported by CSI associated with the RS resource;
the first parameter set is used by the first node U2 for determining at least one of a downlink receiving time or an uplink sending time; and a candidate of the CSI report quantity comprises at least one of an L1-RSRP, an L1-SINR, a CRI, an SSBRI, an RI, a PMI, a CQI, or an LI.

As one embodiment, the first node U2 is the first node in the present application.

As one embodiment, the second node U1 is the second node in the present application.

As one embodiment, an air interface between the second node U1 and the first node U2 comprises a wireless interface between a base station device and user equipment.

As one embodiment, an air interface between the second node U1 and the first node U2 comprises a wireless interface between a relay node device and user equipment.

As one embodiment, an air interface between the second node U1 and the first node U2 comprises a wireless interface between user equipment and user equipment.

As one embodiment, the second node U1 is a serving cell maintenance base station of the first node U2.

As one embodiment, the second node U1 is a maintenance base station of a cell associated with at least one RS resource in the plurality of RS resources.

As one embodiment, the second node U1 is different from a maintenance base station of a cell associated with any RS resource in the plurality of RS resources.

As one embodiment, the base station comprises at least one of a gNB or a TRP.

As one embodiment, the first information block is transmitted on a PDSCH (Physical Downlink Shared Channel).

As one embodiment, the step in the block F51 in FIG. 5 exists, and the above method used in a second node for wireless communication comprises: sending an RS in at least one RS resource in the plurality of RS resources.

As one embodiment, the number of the at least one RS resource in the plurality of RS resources is equal to the number of the plurality of RS resources.

As one embodiment, the number of the at least one first RS resource in the plurality of RS resources is smaller than the number of the plurality of RS resources.

As one embodiment, there is one RS resource in the plurality of RS resources, a sender of which is different from the second node U1.

As one embodiment, there is one RS resource in the plurality of RS resources, a sender of which is one cell waiting for being indicated as a serving cell.

As one embodiment, the sender of one RS resource refers to: a sender of an RS in the one RS resource.

As one embodiment, the step in the block F52 in FIG. 5 exists; and the first node U2 receives the plurality of RS resources.

As one embodiment, receiving the plurality of RS resources refers to: receiving RSs transmitted in the plurality of RS resources.

As one embodiment, receiving the plurality of RS resources refers to: receiving an RS transmitted in at least one RS resource in the plurality of RS resources.

As one embodiment, receiving the plurality of RS resources refers to: receiving an RS transmitted in each RS resource in the plurality of RS resources.

As one embodiment, the steps in the blocks F51 and F52 in FIG. 5 both exist.

As one embodiment, the step in the block F51 in FIG. 5 does not exist, and the step in the block F52 exists; and a sender of each RS resource in the plurality of RS resources is different from the second node U1.

As one embodiment, the step in the block F53 in FIG. 5 exists; and the plurality of RS resources are used by the first node for obtaining channel measurement for calculating the first CSI report.

As one embodiment, the first CSI report is transmitted on a PUCCH.

As one embodiment, the first CSI report is transmitted on a PUSCH.

As one embodiment, the step in the block F54 in FIG. 5 exists; and the above method used in a first node for wireless communication comprises:
receiving a second information block, the second information block indicating P RS resources, P being a positive integer, and the second information block being carried by higher-layer signaling, wherein a resource type of any RS resource in the P RS resources is different from a resource type of any RS resource in the plurality of RS resources.

As one embodiment, the second information block comprises all or part of information in each RRC IE in at least one RRC IE.

As one embodiment, the second information block comprises at least one RRC IE.

As one embodiment, the second information block is one RRC IE.

As one embodiment, the second information block comprises an MAC CE.

As one embodiment, the second information block is carried by RRC signaling and an MAC CE jointly.

As one embodiment, the second information block is UE-specific.

As one embodiment, the second information block comprises all or part of information in a *CellGroupConfig* IE.

As one embodiment, the second information block comprises all or part of information in a *ServingCellConfig* IE.

As one embodiment, the second information block comprises all or part of information in a *CSI-MeasConfig* IE.

As one embodiment, the second information block comprises all or part of information in a *CSI-ReportConfig* IE.

As one embodiment, the second information block comprises all or part of information in a *CSI-ResourceConfig* IE.

As one embodiment, the second information block comprises all or part of information in a *CSI-SSB-ResourceSet* IE.

As one embodiment, the second information block comprises all or part of information in an *NZP-CSI-RS-ResourceSet* IE.

As one embodiment, the second information block comprises all or part of information in a *MeasObjectNR* IE.

As one embodiment, the second information block comprises all or part of information in a *MeasObjectToAddModList* IE.

As one embodiment, the second information block comprises all or part of information in a *MeasConfig* IE.

As one embodiment, the second information block comprises all or part of information of each RRC message in at least one RRC message.

As one embodiment, the second information block comprises all or part of information in an *RRCReconfiguration* message.

As one embodiment, the second information block and the first information block are carried by one identical RRC IE.

As one embodiment, the second information block and the first information block are respectively carried by different RRC IEs.

As one embodiment, the second information block and the first information block respectively comprise information in different fields in one identical RRC IE.

As one embodiment, the second information block and the first information block respectively comprise different information in one identical field in one identical RRC IE.

As one embodiment, the second information block is earlier than the first information block in time domain.

As one embodiment, the second information block is later than the first information block in time domain.

As one embodiment, the P is equal to 1.

As one embodiment, the P is greater than 1.

As one embodiment, the P RS resources comprise a CSI-RS resource.

As one embodiment, the P RS resources comprise an SS/PBCH block resource.

As one embodiment, any RS resource in the P RS resources is one SS/PBCH block resource or CSI-RS resource.

As one embodiment, the P is greater than 1, and the P RS resources have the same resource type.

As one embodiment, the second information block only supports indicating the P RS resources having the same resource type.

As one embodiment, the second information block does not indicate an RS resource other than the P RS resources.

As one embodiment, the P RS resources are RS resources indicated by the second information block.

As one embodiment, the P RS resources comprise all RS resources indicated by the second information block.

As one embodiment, the second information block indicates at least one RS resource other than the P RS resources.

As one sub-embodiment of the above embodiment, the at least one RS resource is used for interference measurement.

As one embodiment, the P RS resources are RS resources indicated by the second information block for channel measurement.

As one embodiment, the P RS resources comprise all RS resources indicated by the second information block for channel measurement.

As one embodiment, the second information block indicates an identifier of each RS resource in the P RS resources.

As one embodiment, the second information block indicates a resource set to which each RS resource in the P RS resources belongs.

As one embodiment, a resource set to which any RS resource in the P RS resources belongs is a CSI-RS resource set or CSI-SSB resource set.

As one embodiment, the second information block is transmitted on a PDSCH.

### Embodiment 6

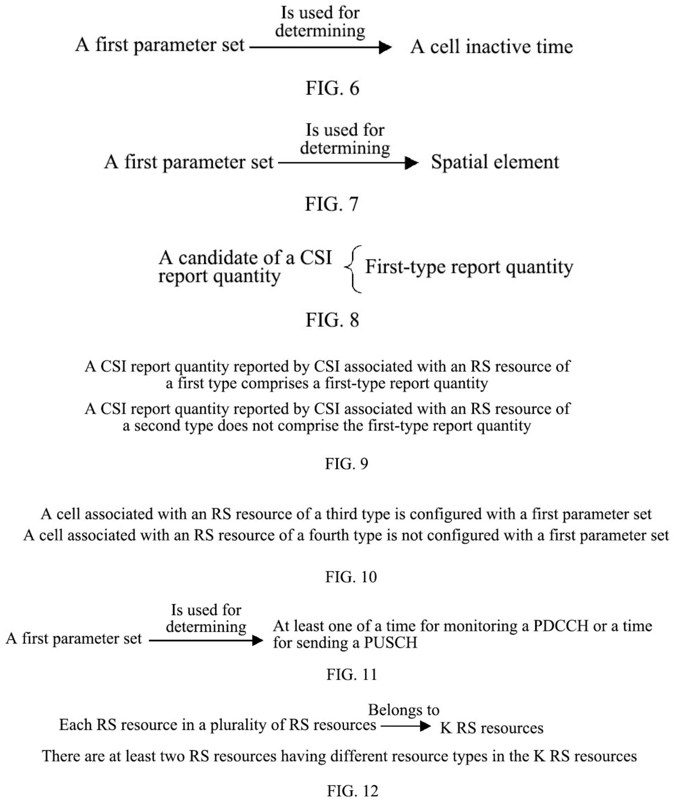

Embodiment 6 illustrates a schematic diagram of a first parameter set according to one embodiment of the present application, as shown in FIG. 6. In Embodiment 6, the first parameter set is used for determining a cell inactive time.

As one embodiment, features of the above method comprise: the first parameter set is used by a cell that supports network energy saving for indicating a cell inactive time.

As one embodiment, benefits of the above method comprise: better supporting network energy saving.

As one embodiment, the first parameter set is used by the first node for determining a cell inactive time.

As one embodiment, the first parameter set is used by the first node for determining whether a cell is in a cell inactive time.

As one embodiment, the first parameter set is used by the first node for determining whether a cell configured with the first reference set is in a cell inactive time.

As one embodiment, if a cell associated with one RS resource is configured with the first parameter set, the first parameter set is used by the first node for determining whether the cell associated with the one RS resource is in a cell inactive time.

As one embodiment, the first parameter set is used for notifying whether a cell is in a cell inactive time.

As one embodiment, the first parameter set is used for notifying whether a cell configured with the first reference set is in a cell inactive time.

As one embodiment, if a cell associated with one RS resource is configured with the first parameter set, the first parameter set is used for notifying whether the cell associated with the one RS resource is in a cell inactive time.

As one embodiment, the first parameter set is used by the first node for determining a cell inactive time.

As one embodiment, the first parameter set is used by the first node for determining a cell inactive time of a cell configured with the first reference set.

As one embodiment, if a cell associated with one RS resource is configured with the first parameter set, the first parameter set is used by the first node for determining a cell inactive time of the cell associated with the one RS resource.

As one embodiment, the first parameter set is used for activating or deactivating cell DRX.

As one embodiment, the first parameter set is used for activating or deactivating cell DTX.

As one embodiment, the cell inactive time includes: a cell DRX (Discontinuous Reception) inactive time.

As one embodiment, the cell inactive time includes: a cell DTX (Discontinuous Transmission) inactive time.

As one embodiment, the cell inactive time refers to: a cell DRX inactive time.

As one embodiment, the cell inactive time refers to: a cell DTX inactive time.

As one embodiment, the cell inactive time refers to: a cell DRX inactive time and a cell DTX inactive time.

As one embodiment, the first node turns off uplink sending in the cell inactive time.

As one embodiment, the first node does not send a PUSCH in the cell inactive time.

As one embodiment, the first node does not send a configured-grant-based PUSCH in the cell inactive time.

As one embodiment, the first node does not send a dynamic-grant-based PUSCH in the cell inactive time.

As one embodiment, the first node does not send a periodic and quasi-static SRS in the cell inactive time.

As one embodiment, the first node does not send an aperiodic SRS in the cell inactive time.

As one embodiment, the first node does not send a periodic and quasi-static CSI report in the cell inactive time.

As one embodiment, the first node does not send an aperiodic CSI report in the cell inactive time.

As one embodiment, the first node does not send an uplink signal in the cell inactive time.

As one embodiment, the first node enters an energy saving mode in the cell inactive time.

As one embodiment, the first node considers that an uplink signal sent within the cell inactive time will not be received or processed.

As one embodiment, the first node considers that a PUSCH sent within the cell inactive time will not be received or processed.

As one embodiment, the first node considers that a configured-grant-based PUSCH sent within the cell inactive time will not be received or processed.

As one embodiment, the first node considers that a dynamic-grant-based PUSCH sent within the cell inactive time will not be received or processed.

As one embodiment, the first node considers that a periodic and quasi-static SRS and/or a periodic and quasi-static CSI report sent within the cell inactive time will not be received or processed.

As one embodiment, the first node considers that an aperiodic SRS and/or an aperiodic CSI report sent within the cell inactive time will not be received or processed.

As one embodiment, one cell turns off uplink reception in the cell inactive time of the one cell.

As one embodiment, one cell does not accept or process a PUSCH in the cell inactive time of the one cell.

As one embodiment, one cell does not accept or process a configured-grant-based PUSCH in the cell inactive time of the one cell.

As one embodiment, one cell does not accept or process a dynamic-grant-based PUSCH in the cell inactive time of the one cell.

As one embodiment, one cell does not accept or process an uplink signal in the cell inactive time of the one cell.

As one embodiment, one cell does not accept or process a periodic and quasi-static SRS and/or a periodic and quasi-static CSI report in the cell inactive time of the one cell.

As one embodiment, one cell does not accept or process an aperiodic SRS and/or an aperiodic CSI report in the cell inactive time of the one cell.

As one embodiment, one cell enters an energy saving mode in the cell inactive time of the one cell.

As one embodiment, the uplink signal comprises a PUSCH (Physical Uplink Shared Channel).

As one embodiment, the uplink signal comprises a PUCCH (Physical Uplink Control Channel).

As one embodiment, the uplink signal comprises an SRS (Sounding Reference Signal).

As one embodiment, the uplink signal comprises a CSI (Channel State Information) report.

As one embodiment, the uplink signal comprises a PRACH (Physical Random Access Channel).

As one embodiment, the first node turns off downlink reception in the cell inactive time.

As one embodiment, the first node does not monitor a PDCCH for a first-type RNTI in the cell inactive time.

As one embodiment, the first node is not required to monitor a PDCCH for a first-type RNTI in the cell inactive time.

As one embodiment, the first node does not monitor a PDCCH in the cell inactive time.

As one embodiment, the first node is not required to monitor a PDCCH in the cell inactive time.

As one embodiment, the first node does not receive a downlink signal in the cell inactive time.

As one embodiment, the first node does not receive a periodic and quasi-static CSI-RS in the cell inactive time.

As one embodiment, the first node does not receive an aperiodic CSI-RS in the cell inactive time.

As one embodiment, the first node does not receive an SPS PDSCH in the cell inactive time.

As one embodiment, the first node does not receive a dynamically scheduled PDSCH in the cell inactive time.

As one embodiment, the first node enters an energy saving mode in the cell inactive time.

As one embodiment, one cell turns off downlink sending in the cell inactive time of the one cell.

As one embodiment, one cell does not send a PDCCH for the first-type RNTI in the cell inactive time of the one cell.

As one embodiment, one cell does not send a PDCCH in the cell inactive time of the one cell.

As one embodiment, one cell does not send a downlink signal in the cell inactive time of the one cell.

As one embodiment, one cell does not send a periodic and quasi-static CSI-RS in the cell inactive time of the one cell.

As one embodiment, one cell does not send an aperiodic CSI-RS in the cell inactive time of the one cell.

As one embodiment, one cell does not send an SPS PDSCH in the cell inactive time of the one cell.

As one embodiment, one cell does not send a dynamically scheduled PDSCH in the cell inactive time of the one cell.

As one embodiment, one cell enters an energy saving mode in the cell inactive time of the one cell.

As one embodiment, the downlink signal comprises: a PDSCH.

As one embodiment, the downlink signal comprises: a CSI-RS.

As one embodiment, the downlink signal comprises: an SS/PBCH block.

As one embodiment, the meaning of the phrase "not monitoring a PDCCH for a first-type RNTI" includes: not monitoring a PDCCH specific to the first-type RNTI.

As one embodiment, the meaning of the phrase "not monitoring a PDCCH for a first-type RNTI" refers to: not monitoring the PDCCH for a DCI format in which CRC (Cyclic redundancy check) is scrambled by the first-type RNTI.

As one embodiment, the meaning of the phrase "not monitoring a PDCCH for a first-type RNTI" refers to: not monitoring a PDCCH to detect a DCI format in which CRC is scrambled by the first-type RNTI.

As one embodiment, the meaning of the phrase "not monitoring a PDCCH for a first-type RNTI" refers to: not receiving a PDCCH candidate for decoding according to a DCI format in which CRC is scrambled by the first-type RNTI.

As one embodiment, the meaning of the phrase "not monitoring a PDCCH for a first-type RNTI" refers to: not decoding a signal received in a PDCCH candidate according to a DCI format in which CRC is scrambled by the first-type RNTI.

As one embodiment, the meaning of the phrase "not monitoring a PDCCH for a first-type RNTI" refers to: not being in an awake state.

As one embodiment, the first-type RNTI comprises a C(Cell)-RNTI.

As one embodiment, the first-type RNTI refers to a C-RNTI.

As one embodiment, the first-type RNTI includes one or more of a C-RNTI, an MCS (Modulation and Coding Scheme)-C-RNTI, a CS (Configured Scheduling)-RNTI, or an SP (Semi-Persistent)-CSI (Channel state information)-RNTI.

As one embodiment, the first-type RNTI consists of one or more of a C-RNTI, an MCS-C-RNTI, a CS-RNTI, or an SP-CSI-RNTI.

As one embodiment, the first-type RNTI includes one or more of a C-RNTI, an MCS-C-RNTI, a CI (Cancellation Indication)-RNTI, a CS-RNTI, an INT (Interruption)-RNTI, an SFI (Slot Format Indication)-RNTI, an SP-CSI-RNTI, a TPC (Transmit Power Control)-PUCCH-RNTI, a TPC-PUSCH-RNTI, a TPC-SRS-RNTI, an AI-RNTI, an SL (Sidelink)-RNTI, or an SL Semi-persistent scheduling V-RNTI.

As one embodiment, the first-type RNTI is UE-dedicated.

As one embodiment, the PDCCH for a first-type RNTI refers to: a PDCCH carrying DCI with CRC scrambled by the first-type RNTI.

As one embodiment, the PDCCH for a first-type RNTI refers to: a UE-dedicated PDCCH.

As one embodiment, the PDCCH for a first-type RNTI refers to: a non-broadcast and non-multicast PDCCH.

As one embodiment, the phrase "monitoring a PDCCH" refers to: monitoring a PDCCH candidate.

As one embodiment, the phrase "monitoring a PDCCH" refers to: detecting a DCI format by monitoring a PDCCH.

As one embodiment, the phrase "monitoring a PDCCH" refers to: receiving a PDCCH candidate and decoding it according to a monitored DCI format.

### Embodiment 7

Embodiment 7 illustrates a schematic diagram of a first parameter set according to one embodiment of the present application, as shown in FIG. 7. In Embodiment 7, the first parameter set is used for determining a spatial element.

As one embodiment, features of the above method comprise: the first parameter set is used by a cell that supports network energy saving for indicating adjustment of a spatial element.

As one embodiment, benefits of the above method comprise: better supporting network energy saving.

As one embodiment, the first parameter set is used for indicating adjustment of a spatial element.

As one embodiment, the first parameter set is used for indicating dynamic adjustment of a spatial element.

As one embodiment, the first parameter set is used for dynamically indicating a spatial element.

As one embodiment, the first parameter set is used by the first node for determining a spatial element.

As one embodiment, the first parameter set is used for dynamically determining a spatial element.

As one embodiment, a parameter used for indicating a spatial element in the first parameter set is configured by signaling of the Layer 1 or Layer 2.

As one embodiment, a parameter used for indicating a spatial element in the first parameter set is indicated by DCI or configured by an MAC CE.

As one embodiment, a parameter used for indicating a spatial element in the first parameter set is indicated by DCI.

As one embodiment, a parameter used for indicating a spatial element in the first parameter set is configured by an MAC CE.

As one embodiment, the spatial element comprises an antenna port.

As one embodiment, the spatial element comprises an RS port.

As one embodiment, the spatial element comprises an RS resource.

As one embodiment, the spatial element comprises an antenna panel.

As one embodiment, the spatial element comprises a transceiver chain.

As one embodiment, the spatial element comprises a TRP (Transmitter Receiver Point).

As one embodiment, the spatial element comprises sending power.

As one embodiment, the spatial element comprises a power offset.

As one embodiment, the first parameter set is used for determining sending power of a reference signal.

As one embodiment, the first parameter set is used for dynamically determining sending power of a reference signal.

As one embodiment, the first parameter set is used for indicating sending power of a reference signal.

As one embodiment, the first parameter set is used for dynamically indicating sending power of a reference signal.

As one embodiment, the reference signal refers to a downlink reference signal.

As one embodiment, the reference signal comprises at least one of a CSI-RS or an SS/PBCH block.

As one embodiment, the first parameter set is used for determining a power offset of a CSI-RS RE (Resource Element) relative to an SSS (Secondary synchronization signal) RE.

As one embodiment, the first parameter set is used for dynamically determining a power offset of a CSI-RS RE relative to an SSS RE.

As one embodiment, the first parameter set is used for indicating a power offset of a CSI-RS RE relative to an SSS RE.

As one embodiment, the first parameter set is used for dynamically indicating a power offset of a CSI-RS RE relative to an SSS RE.

As one embodiment, the first parameter set is used for determining a power offset of a PDSCH RE relative to a CSI-RS RE.

As one embodiment, the first parameter set is used for dynamically determining a power offset of a PDSCH RE relative to a CSI-RS RE.

As one embodiment, the first parameter set is used for indicating a power offset of a PDSCH RE relative to a CSI-RS RE.

As one embodiment, the first parameter set is used for dynamically indicating a power offset of a PDSCH RE relative to a CSI-RS RE.

As one embodiment, the first parameter set is used for determining an RS resource for channel measurement.

As one embodiment, the first parameter set is used for dynamically determining an RS resource for channel measurement.

As one embodiment, the first parameter set is used for indicating an RS resource for channel measurement.

As one embodiment, the first parameter set is used for dynamically indicating an RS resource for channel measurement.

As one embodiment, the RS resource comprises at least one of a CSI-RS resource or an SS/PBCH block resource.

As one embodiment, the first parameter set is used for determining a resource for interference measurement.

As one embodiment, the first parameter set is used for dynamically determining a resource for interference measurement.

As one embodiment, the first parameter set is used for indicating a resource for interference measurement.

As one embodiment, the first parameter set is used for dynamically indicating a resource for interference measurement.

As one embodiment, the first parameter set is used for determining an RS port.

As one embodiment, the first parameter set is used for dynamically determining an RS port.

As one embodiment, the first parameter set is used for indicating an RS port.

As one embodiment, the first parameter set is used for dynamically indicating an RS port.

As one embodiment, the first parameter set is used for determining an RS port for channel measurement.

As one embodiment, the first parameter set is used for dynamically determining an RS port for channel measurement.

As one embodiment, the first parameter set is used for indicating an RS port for channel measurement.

As one embodiment, the first parameter set is used for dynamically indicating an RS port for channel measurement.

As one embodiment, the first parameter set is used for determining a received RS resource and/or RS port.

As one embodiment, the first parameter set is used for dynamically determining a received RS resource and/or RS port.

As one embodiment, the first parameter set is used for indicating a received RS resource and/or RS port.

As one embodiment, the first parameter set is used for dynamically indicating a received RS resource and/or RS port.

As one embodiment, the RS port comprises: a CSI-RS port.

As one embodiment, the RS port comprises: an antenna port.

As one embodiment, the first parameter set is used for determining a period of a CSI report.

As one embodiment, the first parameter set is used for dynamically determining a period of a CSI report.

As one embodiment, the first parameter set is used for indicating a period of a CSI report.

As one embodiment, the first parameter set is used for dynamically indicating a period of a CSI report.

As one embodiment, the first parameter set is used for dynamically determining a time for sending a CSI report.

As one embodiment, the first parameter set is used for dynamically indicating a time for sending a CSI report.

As one embodiment, the first parameter set is used for dynamically determining a CSI report quantity reported by CSI.

As one embodiment, the first parameter set is used for dynamically indicating a CSI report quantity reported by CSI.

As one embodiment, the first parameter set is used for dynamically determining a time for receiving a CSI-RS and/or an SS/PBCH block.

As one embodiment, the first parameter set is used for dynamically indicating a time for receiving a CSI-RS and/or an SS/PBCH block.

As one embodiment, the first parameter set is used for dynamically activating or deactivating a TRP.

As one embodiment, the first parameter set is used for dynamically activating or deactivating a cell.

As one embodiment, the meaning of dynamically indicating/determining/activating or deactivating refers to: indicating/determining/activating or deactivating through an MAC CE or DCI.

As one embodiment, the meaning of dynamically indicating/determining/activating or deactivating refers to: indicating/determining/activating or deactivating through an MAC CE.

As one embodiment, the meaning of dynamically indicating/determining/activating or deactivating refers to: indicating/determining/activating or deactivating through DCI.

As one embodiment, the meaning of "the first parameter set is used for dynamically indicating/determining/activating or deactivating" refers to: the first parameter set configured by an MAC CE or indicated by DCI is used for indicating/determining/activating or deactivating.

As one embodiment, the meaning of "the first parameter set is used for dynamically indicating/determining/activating or deactivating" refers to: the first parameter set configured by an MAC CE is used for indicating/determining/activating or deactivating.

As one embodiment, the meaning of "the first parameter set is used for dynamically indicating/determining/activating or deactivating" refers to: the first parameter set indicated by DCI is used for indicating/determining/activating or deactivating.

As one embodiment, the meaning of "the first parameter set is used for dynamically indicating/determining/activating or deactivating" refers to: the first parameter set used for indicating/determining/activating or deactivating is configured by an MAC CE or indicated by DCI.

### Embodiment 8

Embodiment 8 illustrates a schematic diagram of a candidate of a CSI report quantity according to one embodiment of the present application, as shown in FIG. 8. In Embodiment 8, the candidate of the CSI report quantity comprises a first-type report quantity, and the first-type report quantity comprises at least one of the following:
- channel state information recovered by a recipient based on the first-type report quantity received is unknown to the first node;
- a generator for generating the first-type report quantity is obtained based on training;
- and the first-type report quantity does not belong to CSI defined by 3GPP R17 or a previous version of 3GPP R17.

As one embodiment, features of the above method comprise: a resource type of one RS resource is related to whether the RS resource supports being used for obtaining channel measurement for an AI/ML-based CSI report.

As one embodiment, benefits of the above method comprise: better supporting AI/ML-based CSI reporting.

As one embodiment, the recipient refers to: a recipient of the CSI report quantity.

As one embodiment, the recipient refers to: a recipient of the first-type report quantity.

As one embodiment, the first-type report quantity comprises: channel state information recovered by a recipient based on the first-type report quantity received is unknown to the first node.

As one embodiment, the first-type report quantity comprises: the generator for generating the first-type report quantity is obtained based on training.

As one embodiment, the first-type report quantity comprises: the first-type report quantity does not belong to CSI defined by 3GPP R17 or a previous version of 3GPP R17.

As one embodiment, the first-type report quantity comprises: channel state information recovered by a recipient based on the first-type report quantity received is unknown to the first node, the generator used for generating the first-type report quantity is obtained based on training, and the first-type report quantity does not belong to CSI defined by 3GPP R17 or a previous version of 3GPP R17.

As one embodiment, the first-type report quantity comprises: in the following three: the channel state information recovered by the recipient based on the first-type report quantity received is unknown to the first node, the generator used for generating the first-type report quantity is obtained based on training, and the first-type report quantity does not belong to CSI defined by 3GPP R17 or a previous version of 3GPP R17, only the channel state information recovered by a recipient based on the first-type report quantity received is unknown to the first node.

As one embodiment, the first-type report quantity comprises: in the following three: channel state information recovered by a recipient based on the first-type report quantity received is unknown to the first node, the generator used for generating the first-type report quantity is obtained based on training, and the first-type report quantity does not belong to CSI defined by 3GPP R17 or a previous version of 3GPP R17, only the generator used for generating the first-type report quantity is obtained based on training.

As one embodiment, the first-type report quantity comprises: in the following three: channel state information recovered by a recipient based on the first-type report quantity received is unknown to the first node, the generator used for generating the first-type report quantity is obtained based on training, and the first-type report quantity does not belong to the CSI defined by 3GPP R17 or the previous version of 3GPP R17, only the first-type report quantity does not belong to CSI defined by 3GPP R17 or a previous version of 3GPP R17.

As one embodiment, the recovered channel state information comprises recovered CSI (Channel State Information).

As one embodiment, the recovered channel state information comprises a recovered channel matrix.

As one embodiment, the recovered channel state information comprises information of a recovered channel matrix.

As one embodiment, the recovered channel state information comprises amplitude and phase information of elements in a recovered channel matrix.

As one embodiment, the recovered channel state information comprises a recovered eigenvector.

As one embodiment, the recovered channel state information comprises amplitude and phase information of elements in a recovered eigenvector.

As one embodiment, the recovered channel state information comprises a recovered precoding matrix or a precoding vector.

As one embodiment, the recovered channel state information comprises a recovered PMI.

As one embodiment, the recovered channel state information comprises a recovered CQI.

As one embodiment, the recovered channel state information comprises a recovered LI.

As one embodiment, the recovered channel state information comprises a recovered RI.

As one embodiment, the recovered channel state information comprises a recovered CRI.

As one embodiment, the recovered channel state information is used for precoding.

As one embodiment, the recovered channel state information refers to recovered CSI.

As one embodiment, the recovered channel state information refers to a recovered channel matrix.

As one embodiment, the recovered channel state information refers to a recovered eigenvector.

As one embodiment, the recovered channel state information refers to a recovered precoding matrix or precoding vector.

As one embodiment, the recovered channel state information refers to a recovered PMI.

As one embodiment, the recovered channel state information refers to a recovered CQI.

As one embodiment, the recovered channel state information refers to a recovered LI.

As one embodiment, the recovered channel state information refers to a recovered RI.

As one embodiment, the recovered channel state information refers to at least one of a recovered precoding matrix or vector, a CQI, or an LI.

As one embodiment, the generator is a CSI generator.

As one embodiment, the generator comprises one function.

As one embodiment, the generator is one function.

As one embodiment, the generator is one function used for generating CSI.

As one embodiment, the generator is one function used for generating compressed CSI.

As one embodiment, the generator is one function used for generating CSI based on input channel measurement.

As one embodiment, the generator is one function used for generating CSI based on input channel measurement and interference measurement.

As one embodiment, the generator is one function used for generating compressed CSI based on at least the former of input channel measurement and interference measurement.

As one embodiment, the generator includes an input and an output.

As one embodiment, an input of the generator includes CSI before compression.

As one embodiment, the CSI before compression comprises a PMI.

As one embodiment, the CSI before compression comprises one or more of a CQI, a CRI, or an RI.

As one embodiment, the CSI before compression comprises at least one channel matrix.

As one embodiment, the CSI before compression comprises information of at least one channel matrix.

As one embodiment, the CSI before compression comprises amplitude and phase information of elements in at least one channel matrix.

As one embodiment, the CSI before compression comprises at least one eigenvector.

As one embodiment, the CSI before compression comprises information of at least one eigenvector.

As one embodiment, the CSI before compression includes amplitude and phase information of elements in at least one eigenvector.

As one embodiment, the CSI before compression is obtained after preprocessing at least one channel matrix.

As one embodiment, the CSI before compression is obtained after preprocessing at least one eigenvector.

As one embodiment, the preprocessing includes DFT (Discrete Fourier Transform).

As one embodiment, the preprocessing includes one or more of quantization, transformation from a spatial domain to an angular domain, transformation from a frequency domain to a time domain, transformation from a time domain to a frequency domain, or truncation.

As one embodiment, an output of the generator includes CSI.

As one embodiment, an output of the generator includes compressed CSI.

As one embodiment, the compressed CSI includes a compressed precoding matrix or precoding vector.

As one embodiment, the compressed CSI includes at least one of a compressed channel matrix or a compressed eigenvector.

As one embodiment, the compressed CSI includes one or more of a compressed PMI, a compressed channel matrix, or a compressed eigenvector.

As one embodiment, the compressed CSI includes one or more of a compressed PMI, a compressed channel matrix, a compressed eigenvector, compressed channel matrix information, a compressed channel covariance matrix, or compressed channel covariance matrix information.

As one embodiment, the compressed CSI is non-codebook-based.

As one embodiment, the compressed CSI is generated based on artificial intelligence or machine learning.

As one embodiment, the compressed CSI is generated based on CNNs (Conventional Neural Networks) or a Transformer.

As one embodiment, an output of the generator is the first-type report quantity.

As one embodiment, an output of the generator includes the first-type report quantity.

As one embodiment, an output of the generator is used for generating the first-type report quantity.

As one embodiment, the first-type report quantity is obtained after post-processing an output of the generator.

As one embodiment, the post-processing includes quantification.

As one embodiment, the post-processing refers to quantification.

As one embodiment, the post-processing includes DFT.

As one embodiment, the post-processing includes one or more of quantization, dropping, DFT, transformation from an angular domain to a spatial domain, transformation from a frequency domain to a time domain, transformation from a time domain to a frequency domain, or truncation.

As one embodiment, the first-type report quantity is compressed CSI.

As one embodiment, the first-type report quantity comprises compressed CSI.

As one embodiment, the first-type report quantity is non-codebook-based.

As one embodiment, the first-type report quantity is generated based on artificial intelligence or machine learning.

As one embodiment, the first-type report quantity is generated based on a neural network.

As one embodiment, the first-type report quantity is a generated based on a CNN.

As one embodiment, the first-type report quantity is generated based on a Transformer.

As one embodiment, the first-type report quantity is used for precoding, and the first-type report quantity does not include a codebook index.

As one embodiment, the first-type report quantity includes a plurality of bits.

As one embodiment, the first-type report quantity includes at least one matrix or vector.

As one sub-embodiment of the above embodiment, elements in each matrix or vector in the at least one matrix or vector are in a complex number.

As one sub-embodiment of the above embodiment, elements in each matrix or vector in the at least one matrix or vector are in a real number.

As one embodiment, the first-type report quantity comprises a PMI.

As one embodiment, the first-type report quantity comprises compressed PMI.

As one embodiment, the first-type report quantity comprises a CQI.

As one embodiment, the first-type report quantity comprises an RI.

As one embodiment, the first-type report quantity comprises a CRI.

As one embodiment, the first-type report quantity comprises an LI.

As one embodiment, the first-type report quantity comprises one or more of a CQI, a CRI, an LI, or an RI.

As one embodiment, the first-type report quantity is a PMI.

As one embodiment, the first-type report quantity is compressed PMI.

As one embodiment, the first-type report quantity is a CQI.

As one embodiment, the first-type report quantity is an LI.

As one embodiment, the first-type report quantity comprises at least one channel matrix.

As one embodiment, the first-type report quantity comprises information of at least one channel matrix.

As one embodiment, the first-type report quantity comprises at least one compressed channel matrix.

As one embodiment, the first-type report quantity comprises at least one eigenvector.

As one embodiment, the first-type report quantity comprises information of at least one eigenvector.

As one embodiment, the first-type report quantity comprises at least one compressed eigenvector.

As one embodiment, the first-type report quantity comprises at least one precoding matrix or precoding vector.

As one embodiment, the first-type report quantity comprises at least one compressed precoding matrix or precoding vector.

As one embodiment, the first-type report quantity is at least one channel matrix.

As one embodiment, the first-type report quantity is at least one compressed channel matrix.

As one embodiment, the first-type report quantity is at least one eigenvector.

As one embodiment, the first-type report quantity is at least one compressed eigenvector.

As one embodiment, the first-type report quantity is at least one precoding matrix or precoding vector.

As one embodiment, the first-type report quantity is at least one compressed precoding matrix or precoding vector.

As one embodiment, the training is executed by the first node.

As one embodiment, the training is executed by the recipient.

As one embodiment, the training is performed jointly by the first node and the recipient.

As one embodiment, the training is based on one training data set.

As one embodiment, the training uses data from one training data set.

As one embodiment, the training is used for determining a parameter group used by the generator.

As one embodiment, the training is used for determining a model used by the generator.

As one embodiment, the generator comprises one or more of a convolution function, a pooling function, a concatenation function, or an activation function.

As one embodiment, the generator comprises a full-connection layer.

As one embodiment, the generator comprises a pooling layer.

As one embodiment, the generator comprises at least one convolution layer.

As one embodiment, the generator comprises at least one coding layer.

As one embodiment, the generator comprises a full-connection layer and at least one coding layer.

As one embodiment, one coding layer comprises at least one convolution layer and one pooling layer.

As one embodiment, in a convolution layer, at least one convolution kernel is used for performing convolution on an input of the generator to generate a corresponding feature map, and at least one feature map output by the convolution layer is reshaped into one vector and input to a full-connection layer; and the full-connection layer converts the one vector into the output of the generator.

As one embodiment, part or all of the convolution kernel size, number of convolution layers, convolution step size, pooling kernel size, pooling kernel step size, pooling function, activation function or number of feature maps of the generator are obtained by the training.

As one embodiment, part or all of the convolution kernel, pooling kernel, pooling function, activation function, parameters of the pooling function, or parameters of the activation function of the generator are obtained by the training.

As one embodiment, a CNN-based coder is used for implementing the generator.

As one embodiment, a Transformer-based coder is used for implementing the generator.

As one embodiment, CSI defined by 3GPP R17 or a previous version of 3GPP R17 comprises an L1-RSRP, an L1-SINR, a CRI, an SSBRI, an RI, a PMI, a CQI, and an LI.

As one embodiment, CSI defined by 3GPP R17 or a previous version of 3GPP R17 further comprises Capability[Set]Index.

As one embodiment, CSI defined by 3GPP R17 or a previous version of 3GPP R17 consists of an L1-RSRP, an L1-SINR, a CRI, an SSBRI, an RI, a PMI, a CQI, and an LI.

As one embodiment, CSI defined by 3GPP R17 or a previous version of 3GPP R17 consists of an L1-RSRP, an L1-SINR, a CRI, an SSBRI, an RI, a PMI, a CQI, an LI, and Capability[Set]Index.

### Embodiment 9

Embodiment 9 illustrates a schematic diagram of a resource type of an RS resource according to one embodiment of the present application, as shown in FIG. 9. In Embodiment 9, a resource type of the plurality of RS resources is one of a first type or a second type, a CSI report quantity reported by CSI associated with an RS resource having a resource type of the first type comprises the first-type report quantity, and a CSI report quantity reported by CSI associated with an RS resource having a resource type of the second type does not comprise the first-type report quantity.

As one embodiment, features of the above method comprise: the plurality of RS resources indicated by the first information block all support AI/ML-based CSI reporting, or none of them supports AI/ML-based CSI reporting.

As one embodiment, benefits of the above method comprise: in a scenario where there are RS resources that support AI/ML-based CSI reporting and do not support AI/ML-based CSI reporting simultaneously, a configuration of the first information block is optimized, signaling overhead is saved, and processing of UE is simplified.

As one embodiment, a resource type of any RS resource in the plurality of RS resources is the first type or the second type.

As one embodiment, a resource type of each RS resource in the plurality of RS resources is the first type or the second type.

As one embodiment, the meaning of "a CSI report quantity reported by CSI associated with an RS resource having a resource type of the first type comprises the first-type report quantity" is: a CSI report quantity reported by CSI associated with any RS resource having a resource type of the first type comprises the first-type report quantity.

As one embodiment, the meaning of "a CSI report quantity reported by CSI associated with an RS resource having a resource type of the first type comprises the first-type report quantity" is: a CSI report quantity reported by each CSI associated with any RS resource having a resource type of the first type comprises the first-type report quantity.

As one embodiment, the meaning of "a CSI report quantity reported by CSI associated with an RS resource having a resource type of the first type comprises the first-type report quantity" is: a CSI report quantity reported by at least one CSI associated with any RS resource having a resource type of the first type comprises the first-type report quantity.

As one embodiment, a CSI report quantity reported by one CSI associated with an RS resource having one resource type of the first type does not comprise the first-type report quantity.

As one embodiment, the meaning of "a CSI report quantity reported by CSI associated with an RS resource having a resource type of the second type does not comprise the first-type report quantity" is: a CSI report quantity reported by CSI associated with any RS resource having a resource type of the second type does not comprise the first-type report quantity.

As one embodiment, the meaning of "a CSI report quantity reported by CSI associated with an RS resource having a resource type of the second type does not comprise the first-type report quantity" is: a CSI report quantity reported by each piece of CSI associated with any RS resource having a resource type of the second type does not comprise the first-type report quantity.

As one embodiment, a CSI report quantity reported by at least one piece of CSI associated with any RS resource having a resource type of the first type comprises the first-type report quantity, and a CSI report quantity reported by each piece of CSI associated with any RS resource having a resource type of the second type does not comprise the first-type report quantity.

As one embodiment, if a CSI report quantity reported by one piece of CSI associated with one RS resource comprises the first-type report quantity, a resource type of the one RS resource is the first type.

As one embodiment, if a CSI report quantity reported by each piece of CSI associated with one RS resource does not comprise the first-type report quantity, a resource type of the one RS resource is the second type.

As one embodiment, the first information block only supports indicating the plurality of RS resources that are all of the first type or the plurality of RS resources that are all of the second type.

As one embodiment, the plurality of RS resources indicated by the first information block cannot comprise both an RS resource of the first type and an RS resource of the second type.

As one embodiment, a sender of the first information block cannot indicate, in the first information block, both an RS resource of the first type as an RS resource within the plurality of RS resources and an RS resource of the second type as an RS resource within the plurality of RS resources.

As one embodiment, a situation in which both an RS resource of the first type and an RS resource of the second type exist within the plurality of RS resources indicated by the first information block will not occur.

As one embodiment, the first node does not expect that both an RS resource of the first type and an RS resource of the second type exist in the plurality of RS resources.

As one embodiment, the first node assumes that resource types of the plurality of RS resources are all the first type or are all the second type.

As one embodiment, a resource type of one RS resource is related to a first-type parameter, and the first-type parameter is a higher-layer parameter.

As one embodiment, a first-type parameter is used for determining a resource type of one RS resource, and the first-type parameter is a higher-layer parameter.

As one embodiment, a resource type of one RS resource is related to whether the one RS resource is configured with the first-type parameter.

As one embodiment, whether one RS resource is configured with the first-type parameter is used for determining a resource type of the one RS resource.

As one embodiment, if one RS resource is configured with the first-type parameter, a resource type of the one RS resource is the first type.

As one embodiment, if one RS resource is not configured with the first-type parameter, a resource type of the one RS resource is the second type.

As one embodiment, a resource type of one RS resource is related to a value of the first-type parameter configured for the one RS resource.

As one embodiment, a value of the first-type parameter configured for one RS resource is used for determining a resource type of the one RS resource.

As one embodiment, if one RS resource is configured with the first-type parameter that is set as one parameter value in a first parameter value set, a resource type of the one RS resource is the second type.

As one embodiment, if one RS resource is not configured with the first-type parameter that is set as one parameter value in a first parameter value set, a resource type of the one RS resource is the first type.

As one embodiment, if one RS resource is configured with the first-type parameter that is set as one parameter value in a first parameter value set, a resource type of the one RS resource is the first type.

As one embodiment, if one RS resource is not configured with the first-type parameter that is set as one parameter value in a first parameter value set, a resource type of the one RS resource is the second type.

As one embodiment, the first parameter value set only comprises one parameter value.

As one embodiment, the first parameter value set comprises a plurality of parameter values.

As one embodiment, whether one RS resource is configured with the first-type parameter refers to: whether an *NZP-CSI-RS-Resource* IE used for configuring the one RS resource includes the first-type parameter; and the one RS resource is one CSI-RS resource.

As one embodiment, whether one RS resource is configured with the first-type parameter refers to: whether a resource set to which the one RS resource belongs is configured with the first-type parameter.

As one embodiment, whether one RS resource is configured with the first-type parameter refers to: whether an *NZP-CSI-RS-ResourceSet* IE or a *CSI-SSB-ResourceSet* IE including an identifier of the one RS resource includes the first-type parameter.

As one embodiment, whether one RS resource is configured with the first-type parameter refers to: whether a *CSI-ResourceConfig* IE indicating a resource set to which the one RS resource belongs includes the first-type parameter.

As one embodiment, if an *NZP-CSI-RS-Resource* IE used for configuring one RS resource includes the first-type parameter, a resource type of the one RS resource is the first type.

As one embodiment, if an *NZP-CSI-RS-Resource* IE used for configuring one RS resource does not include the first-type parameter, a resource type of the one RS resource is the second type.

As one embodiment, if there is one resource set configured with the first-type parameter in resource sets to which one RS resource belongs, a resource type of the one RS resource is the first type.

As one embodiment, if each resource set to which one RS resource belongs is not configured with the first-type parameter, a resource type of the one RS resource is the second type.

As one embodiment, if there is at least one *CSI-ResourceConfig* IE that indicates one resource set to which one RS resource belongs and includes the first-type parameter, a resource type of the one RS resource is the first type.

As one embodiment, if any *CSI-ResourceConfig* IE to which any resource set to which one RS resource belongs belongs does not include the first-type parameter, a resource type of the one RS resource is the second type.

As one embodiment, a value of the first-type parameter configured for one RS resource refers to: a value of the first-type parameter included in an *NZP-CSI-RS-Resource* IE used for configuring the one RS resource; and the one RS resource is one CSI-RS resource.

As one embodiment, a value of the first-type parameter configured for one RS resource refers to: a value of the first-type parameter configured for a resource set to which the one RS resource belongs.

As one embodiment, a value of the first-type parameter configured for one RS resource refers to: a value of the first-type parameter included in an *NZP-CSI-RS-ResourceSet* IE or a *CSI-SSB-ResourceSet* IE including an identifier of the one RS resource.

As one embodiment, a value of the first-type parameter configured for one RS resource refers to: a value of the first-type parameter included in a *CSI-ResourceConfig* IE indicating a resource set to which the one RS resource belongs.

As one embodiment, if an *NZP-CSI-RS-Resource* IE used for configuring one RS resource includes the first-type parameter that is set as one parameter value in the first parameter value set, a resource type of the one RS resource is the first type.

As one embodiment, if an *NZP-CSI-RS-Resource* IE used for configuring one RS resource does not include the first-type parameter that is set as one parameter value in the first parameter value set, a resource type of the one RS resource is the second type.

As one embodiment, if there is one resource set configured with the first-type parameter that is set as one parameter value in the first parameter value set in a resource set to which one RS resource belongs, a resource type of the one RS resource is the first type.

As one embodiment, if each resource set to which one RS resource belongs is not configured with the first-type parameter that is set as one parameter value in the first parameter value set, a resource type of the one RS resource is the second type.

As one embodiment, if each resource set to which one RS resource belongs is configured with the first-type parameter that is set as one parameter value in the first parameter value set, a resource type of the one RS resource is the second type.

As one embodiment, if there is one resource set not configured with the first-type parameter that is set as one parameter value in the first parameter value set in a resource set to which one RS resource belongs, a resource type of the one RS resource is the first type.

As one embodiment, whether one RS resource is configured with the first-type parameter refers to: whether there is one CSI reporting configuration including the first-type parameter in CSI reporting configurations associated with the one RS resource.

As one embodiment, whether one RS resource is configured with the first-type parameter refers to: whether each CSI reporting configuration associated with the one RS resource includes the first-type parameter.

As one embodiment, a value of the first-type parameter configured for one RS resource refers to: a value of the first-type parameter included in one CSI reporting configuration associated with the one RS resource.

As one embodiment, if there is one CSI reporting configuration including the first-type parameter in CSI reporting configurations with which one RS resource is associated, a resource type of the one RS resource is the first type.

As one embodiment, if each CSI reporting configuration associated with one RS resource does not include the first-type parameter, a resource type of the one RS resource is the second type.

As one embodiment, if there is one CSI reporting configuration including the first-type parameter that is set as one parameter value in a first parameter value set in CSI reporting configurations with which one RS resource is associated, a resource type of the one RS resource is the first type.

As one embodiment, if each CSI reporting configuration associated with one RS resource does not include the first-type parameter that is set as one parameter value in a first parameter value set, a resource type of the one RS resource is the second type.

As one embodiment, the CSI reporting configuration is an RRC IE.

As one embodiment, the CSI reporting configuration is an RRC IE including *"CSI"* and *"Report"* in its name.

As one embodiment, the CSI reporting configuration is an *CSI-ReportConfig* IE.

As one embodiment, an RS resource of each CSI reporting configuration associated with one RS resource for channel measurement comprises the one RS resource.

As one embodiment, RS resources indicated by a higher-layer parameter *resourcesForChannelMeasurement* of each CSI reporting configuration associated with one RS resource include the first RS resource.

As one embodiment, the CSI reporting configuration associated with one RS resource refers to: an RS resource used for channel measurement includes a CSI reporting configuration of the one RS resource.

As one embodiment, the CSI reporting configuration associated with one RS resource refers to: an RS resource used for channel measurement includes a *CSI-ReportConfig* IE of the one RS resource.

As one embodiment, the CSI reporting configuration associated with one RS resource refers to: an RS resource indicated by its higher-layer parameter *resourcesForChannelMeasurement* includes a CSI reporting configuration of the one RS resource.

As one embodiment, the CSI reporting configuration associated with one RS resource refers to: an RS resource indicated by its higher-layer parameter *resourcesForChannelMeasurement* includes a *CSI-ReportConfig* IE of the one RS resource.

As one embodiment, the first-type parameter is one character string.

As one embodiment, the first-type parameter is one non-negative integer.

As one embodiment, the first-type parameter is an RRC parameter.

As one embodiment, the first-type parameter is one field in an RRC IE.

As one embodiment, the first-type parameter comprises information in at least one field in an RRC IE.

As one embodiment, the first-type parameter is used for indicating whether one RS resource can be used for obtaining channel measurement for calculating the first-type report quantity.

As one embodiment, the first-type parameter is used for indicating whether channel measurement obtained based on one RS resource can be used for an input of a CSI generator based on artificial intelligence or machine learning.

As one embodiment, if a CSI report quantity reported by one piece of CSI associated with one RS resource comprises the first-type report quantity, the CSI report quantity reported by each piece of CSI associated with the one RS resource comprises the first-type report quantity.

As one embodiment, if a CSI report quantity reported by one piece of CSI associated with one RS resource does not comprise the first-type report quantity, a CSI report quantity reported by each piece of CSI associated with the one RS resource does not comprise the first-type report quantity.

As one embodiment, there is a CSI report quantity reported by one part of CSI associated with one RS resource that does not comprise the first-type report quantity and a CSI report quantity reported by the other part of CSI associated that does not comprise the first-type report quantity.

### Embodiment 10

Embodiment 10 illustrates a schematic diagram of a resource type of an RS resource according to one embodiment of the present application, as shown in FIG. 10. In Embodiment 10, a resource type of the plurality of RS resources is one of a third type or a fourth type, a cell associated with an RS resource having a resource type of the third type is configured with the first parameter set, and a cell associated with an RS resource having a resource type of the fourth type is not configured with the first parameter set.

As one embodiment, features of the above method comprise: a type of one RS resource is related to whether a cell associated with the RS resource supports network energy saving.

As one embodiment, features of the above method comprise: cells associated with the plurality of RS resources indicated by the first information block all support network energy saving, or none of them supports network energy saving.

As one embodiment, benefits of the above method comprise: in a scenario where there are cells that support network energy saving and do not support network energy saving simultaneously, a configuration of the first information block is optimized, the signaling overhead is saved, and the processing of UE is simplified.

As one embodiment, a resource type of any RS resource in the plurality of RS resources is the third type or the fourth type.

As one embodiment, a resource type of each RS resource in the plurality of RS resources is the third type or the fourth type.

As one embodiment, the meaning of "a cell associated with an RS resource having a resource type of the third type is configured with the first parameter set" is: a cell associated with any RS resource having a resource type of the third type is configured with the first parameter set.

As one embodiment, the meaning of "a cell associated with an RS resource having a resource type of the fourth type is not configured with the first parameter set" is: a cell associated with any RS resource having a resource type of the fourth type is not configured with the first parameter set.

As one embodiment, if a cell associated with one RS resource is configured with the first parameter set, a resource type of the one RS resource is the third type.

As one embodiment, if a cell associated with one RS resource is not configured with the first parameter set, a resource type of the one RS resource is the fourth type.

As one embodiment, the first information block only supports indicating the plurality of RS resources that are all of the third type or the plurality of RS resources that are all of the fourth type.

As one embodiment, the plurality of RS resources indicated by the first information block cannot include both an RS resource of the third type and an RS resource of the fourth type.

As one embodiment, a sender of the first information block cannot indicate, in the first information block, both an RS resource of the third type as an RS resource in the plurality of RS resources and an RS resource of the fourth type as an RS resource in the plurality of RS resources.

As one embodiment, a situation, indicated by the first information block, that there are both an RS resource of the third type and an RS resource of the fourth type in the plurality of RS resources will not occur.

As one embodiment, the first node does not expect that the plurality of RS resources comprise both an RS resource of the third type and an RS resource of the fourth type.

As one embodiment, the first node assumes that resource types of the plurality of RS resources are all the third type or are all the fourth type.

As one embodiment, "a cell associated with one RS resource is configured with the first parameter set" refers to: the first node is configured with the first parameter set on the cell associated with the one RS resource.

As one embodiment, "a cell associated with one RS resource is configured with the first parameter set" refers to: signaling that carries parameters in the first parameter set is sent on the cell associated with the one RS resource; and the signaling includes at least one of RRC signaling, an MAC CE, or DCI.

As one embodiment, "a cell associated with one RS resource is configured with the first parameter set" refers to: in the cell associated with the one RS resource, sending signaling to indicate parameters in the first parameter set is supported; and the signaling includes at least one of RRC signaling, an MAC CE, or DCI.

As one embodiment, "a cell associated with one RS resource is configured with the first parameter set" refers to: the first parameter set is configured for the first node on the cell associated with the one RS resource.

As one embodiment, "a cell associated with one RS resource is configured with the first parameter set" refers to: the first parameter set is configured for the cell associated with the one RS resource.

As one embodiment, "a cell associated with one RS resource is configured with the first parameter set" refers to: the first node is configured to be used for the first parameter set of the cell associated with the one RS resource.

As one embodiment, "a cell associated with one RS resource is configured with the first parameter set" refers to: the cell associated with the one RS resource supports network energy saving.

As one embodiment, "a cell associated with one RS resource is not configured with the first parameter set" refers to: the first node is not configured with the first parameter set on the cell associated with the one RS resource.

As one embodiment, "a cell associated with one RS resource is not configured with the first parameter set" refers to: signaling that carries parameters in the first parameter set is not sent on the cell associated with the one RS resource; and the signaling includes at least one of RRC signaling, an MAC CE, or DCI.

As one embodiment, "a cell associated with one RS resource is not configured with the first parameter set" refers to: sending signaling on the cell associated with the one RS resource to indicate parameters in the first parameter set is not supported; and the signaling includes at least one of RRC signaling, an MAC CE, or DCI.

As one embodiment, "a cell associated with one RS resource is not configured with the first parameter set" refers to: the first parameter set is not configured for the first node on the cell associated with the one RS resource.

As one embodiment, "a cell associated with one RS resource is not configured with the first parameter set" refers to: the first parameter set is not configured for the cell associated with the one RS resource.

As one embodiment, "a cell associated with one RS resource is not configured with the first parameter set" refers to: the first node is not configured with the first parameter set used for the cell associated with the one RS resource.

As one embodiment, "a cell associated with one RS resource is not configured with the first parameter set" refers to: the cell associated with the one RS resource does not support network energy saving.

As one embodiment, if one cell is configured with the first parameter set, resource types of all RS resources with an associated cell being the one cell are all the third type.

As one embodiment, if one cell is not configured with the first parameter set, resource types of all RS resources with an associated cell being the one cell are all the fourth type.

As one embodiment, a second-type parameter is used for determining whether one cell is configured with the first parameter set, and the second-type parameter is a higher-layer parameter.

As one embodiment, the second-type parameter is one field of an RRC IE.

As one embodiment, the second-type parameter comprises information in one or more fields of an RRC IE.

As one embodiment, the second-type parameter is one character string.

As one embodiment, the second-type parameter is a non-negative integer.

As one embodiment, if one cell is configured with the second-type parameter, the one cell is configured with the first parameter set.

As one embodiment, if one cell is not configured with the second-type parameter, the one cell is not configured with the first parameter set.

As one embodiment, if one cell is configured with the second-type parameter that is set as a second parameter value, the one cell is configured with the first parameter set.

As one embodiment, if one cell is not configured with the second-type parameter that is set as a second parameter value, the one cell is not configured with the first parameter set.

As one embodiment, if SpCellConfig or SCellConfig used for configuring one cell includes the second-type parameter, the one cell is configured with the first parameter set.

As one embodiment, if SpCellConfig or SCellConfig used for configuring one cell does not include the second-type parameter, the one cell is not configured with the first parameter set.

As one embodiment, if SpCellConfig or SCellConfig used for configuring one cell includes the second-type parameter that is set as a second parameter value, the one cell is configured with the first parameter set.

As one embodiment, if SpCellConfig or SCellConfig used for configuring one cell does not include the second-type parameter that is set as a second parameter value, the one cell is not configured with the first parameter set.

As one embodiment, the second parameter value is "enabled".

As one embodiment, the second parameter value includes at least one of a character string "energy" or a character string "saving".

As one embodiment, the second parameter value is equal to 1.

As one embodiment, the second-type parameter is used for indicating whether one cell supports network energy saving.

### Embodiment 11

Embodiment 11 illustrates a schematic diagram of a first parameter set according to one embodiment of the present application, as shown in FIG. 11. In Embodiment 11, the first parameter set is used by the first node for determining at least one of a time for monitoring a PDCCH or a time for sending a PUSCH.

As one embodiment, the first parameter set is used for determining a time for monitoring a PDCCH.

As one embodiment, the first parameter set is used for determining a time for sending a PUSCH.

As one embodiment, the first parameter set is used for determining only a time for monitoring a PDCCH in both the time for monitoring the PDCCH and a time for sending a PUSCH.

As one embodiment, the first parameter set is used for determining only a time for sending a PUSCH in both a time for monitoring a PDCCH and the time for sending the PUSCH.

As one embodiment, the first parameter set is used for determining a time for monitoring a PDCCH and a time for sending a PUSCH.

As one embodiment, the first parameter set is used for dynamically determining a time for monitoring a PDCCH.

As one embodiment, the first parameter set is used for dynamically determining a time for sending a PUSCH.

As one embodiment, the first parameter set is used for dynamically determining a time for monitoring a PDCCH and a time for sending a PUSCH.

As one embodiment, the first parameter set is used for indicating a time for monitoring a PDCCH.

As one embodiment, the first parameter set is used for indicating a time for sending a PUSCH.

As one embodiment, the first parameter set is used for indicating a time for monitoring a PDCCH and a time for sending a PUSCH.

As one embodiment, the first parameter set is used for dynamically indicating a time for monitoring a PDCCH.

As one embodiment, the first parameter set is used for dynamically indicating a time for sending a PUSCH.

As one embodiment, the first parameter set is used for dynamically indicating a time for monitoring a PDCCH and a time for sending a PUSCH.

As one embodiment, parameters in the first parameter set sent through DCI or an MAC CE are used for determining at least one of the time for monitoring a PDCCH or the time for sending a PUSCH.

As one embodiment, parameters in the first parameter set sent through DCI or an MAC CE are used for indicating at least one of the time for monitoring a PDCCH or the time for sending a PUSCH.

As one embodiment, the time for monitoring a PDCCH refers to: a time for monitoring a PDCCH for the first-type RNTI.

As one embodiment, the time for monitoring a PDCCH refers to: a time for monitoring the PDCCH for any RNTI.

As one embodiment, the first parameter set indicates the time for monitoring a PDCCH by indicating a cell inactive time.

As one embodiment, the first parameter set indicates the time for monitoring a PDCCH by activating or deactivating a TRP.

As one embodiment, the first parameter set indicates the time for monitoring a PDCCH by activating or deactivating a cell.

As one embodiment, the first parameter set is used for dynamically indicating a period of a search space set.

As one embodiment, the first parameter set is used for determining within which periods of the search space set a PDCCH is monitored.

As one embodiment, the first parameter set indicates the time for monitoring a PDCCH by indicating a period of a search space set.

As one embodiment, the first parameter set indicates the time for monitoring a PDCCH by dynamically indicating a period of a search space set.

As one embodiment, the first parameter set indicates the time for monitoring a PDCCH by indicating whether to skip PDCCH monitoring.

As one embodiment, the time for sending a PUSCH refers to: a time for sending a PUSCH based on a dynamic grant.

As one embodiment, the time for sending a PUSCH refers to: a time for sending a PUSCH based on a configured grant.

As one embodiment, the first parameter set indicates the time for sending a PUSCH by indicating a cell inactive time.

As one embodiment, the first parameter set indicates the time for sending a PUSCH by activating or deactivating a TRP.

As one embodiment, the first parameter set indicates the time for sending a PUSCH by activating or deactivating a cell.

As one embodiment, the first parameter set is used for dynamically indicating a period of a PUSCH based on a configured grant.

As one embodiment, the first parameter set indicates the time for sending a PUSCH by indicating a period of the PUSCH based on a configured grant.

As one embodiment, the first parameter set indicates the time for sending a PUSCH by dynamically indicating a period of the PUSCH based on a configured grant.

### Embodiment 12

Embodiment 12 illustrates a schematic diagram of K RS resources according to one embodiment of the present application, as shown in FIG. 12. In Embodiment 12, each RS resource in the plurality of RS resources is one RS resource in K RS resources, and K is a positive integer greater than 1; and there are at least two RS resources having different resource types in the K RS resources.

As one embodiment, the K RS resources comprise a CSI-RS resource.

As one embodiment, the K RS resources comprise an NZP CSI-RS resource.

As one embodiment, the K RS resources comprise an SS/PBCH block resource.

As one embodiment, any RS resource in the K RS resources is one SS/PBCH block resource or CSI-RS resource.

As one embodiment, the K RS resources comprise at least one RS resource not belonging to the plurality of RS resources.

As one embodiment, there are at least two RS resources having the same resource type in the K RS resources.

As one embodiment, candidates of the plurality of RS resources comprise the K RS resources.

As one embodiment, the K RS resources are candidates of the plurality of RS resources.

As one embodiment, candidates of each RS resource in the plurality of RS resources comprise the K RS resources.

As one embodiment, the K RS resources are candidates of each RS resource in the plurality of RS resources.

As one embodiment, the first information block indicates the plurality of RS resources from the K RS resources.

As one embodiment, each RS resource in the K RS resources is a candidate of an RS resource in the plurality of RS resources.

As one embodiment, each RS resource in the K RS resources is a candidate of an RS resource indicated by the first information block.

As one embodiment, each RS resource in the K RS resources is a candidate of an RS resource indicated by the first information block for channel measurement.

As one embodiment, there are two RS resources having different resource types in the K RS resources.

As one embodiment, there are more than two RS resources in the K RS resources, every two of which have different resource types.

As one embodiment, there are two RS resources having their resource types of the first type and the second type respectively in the K RS resources.

As one embodiment, a resource type of any RS resource in the K RS resources is the first type or the second type.

As one embodiment, there are two RS resources having their resource types of the third type and the fourth type respectively in the K RS resources.

As one embodiment, a resource type of any RS resource in the K RS resources is the third type or the fourth type.

As one embodiment, the K RS resources comprise a first RS resource group and a second RS resource group, and the first RS resource and the second RS resource group respectively comprise at least one RS resource in the K RS resources.

As one sub-embodiment of the above embodiment, a resource type of each RS resource in the first RS resource group is the first type, and a resource type of each RS resource in the second RS resource group is the second type.

As one sub-embodiment of the above embodiment, a resource type of each RS resource in the first RS resource group is the third type, and a resource type of each RS resource in the second RS resource group is the fourth type.

As one sub-embodiment of the above embodiment, the first RS resource group comprises only one RS resource in the K RS resources.

As one sub-embodiment of the above embodiment, the first RS resource group comprises a plurality of RS resources in the K RS resources.

As one sub-embodiment of the above embodiment, the second RS resource group comprises only one RS resource in the K RS resources.

As one sub-embodiment of the above embodiment, the second RS resource group comprises a plurality of RS resources in the K RS resources.

As one sub-embodiment of the above embodiment, there is no one RS resource belonging to both the first RS resource group and the second RS resource group simultaneously in the K RS resources.

As one embodiment, K is greater than P.

As one embodiment, each RS resource in the P RS resources is one RS resource in the K RS resources.

As one embodiment, the second information block indicates the P RS resources from the K RS resources.

As one embodiment, each RS resource in the K RS resources is a candidate of an RS resource in the P RS resources.

As one embodiment, each RS resource in the K RS resources is a candidate of an RS resource indicated by the second information block.

As one embodiment, each RS resource in the K RS resources is a candidate of an RS resource indicated by the second information block for channel measurement.

As one embodiment, a cell associated with one RS resource in the K RS resources is one serving cell of the first node.

As one embodiment, a cell associated with one RS resource in the K RS resources is not a serving cell of the first node.

As one embodiment, a cell associated with one RS resource in the K RS resources is not a PCell of the first node, and is neither configured with ServCellIndex nor configured with SCellIndex.

As one embodiment, a cell associated with one RS resource in the K RS resources is a serving cell of the first node, and a cell associated with another RS resource in the K RS resources is not a serving cell of the first node.

As one embodiment, a cell associated with one RS resource in the K RS resources is one cell waiting for being indicated as a serving cell.

As one embodiment, a cell associated with one RS resource in the K RS resources is a serving cell of the first node, and the cell associated with another RS resource in the K RS resources is one cell waiting for being indicated as a serving cell.

As one embodiment, any RS resource in the plurality of RS resources belongs to one resource set in at least one resource set, any resource set in the at least one resource set is one resource set in M resource sets, and M is a positive integer greater than 1; and each resource set in the M resource sets includes one or more RS resources in the K RS resources.

As one embodiment, each RS resource in each resource set in the M resource sets is one of the K RS resources.

As one embodiment, the M resource sets are candidates of the at least one resource set.

As one embodiment, the M resource sets are candidates of a resource set in the at least one resource set.

As one embodiment, each resource set in the M resource sets is a candidate of a resource set in the at least one resource set.

As one embodiment, the first information block indicates the at least one resource set from the M resource sets.

As one embodiment, each resource set in the M resource sets is a candidate of a resource set indicated by the first information block.

As one embodiment, each resource set in the M resource sets is a candidate of a resource set indicated by the first information block for channel measurement.

As one embodiment, any resource set in the M resource sets is a CSI-RS resource set or CSI-SSB resource set.

### Embodiment 13

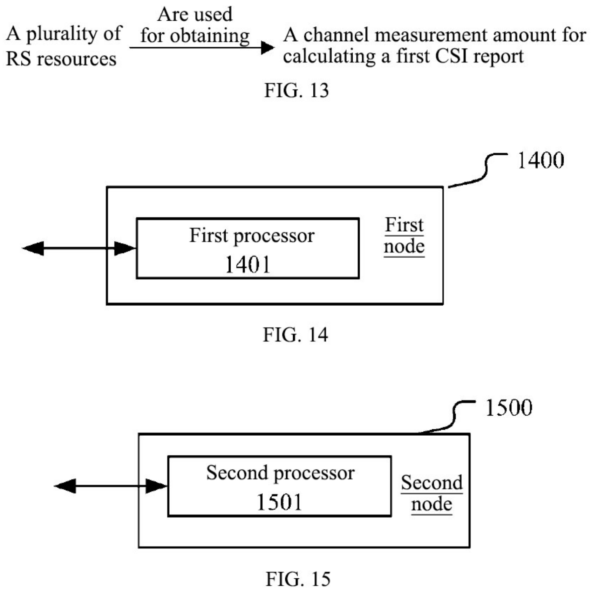

Embodiment 13 illustrates a schematic diagram of a plurality of RS resources and a first CSI report according to one embodiment of the present application, as shown in FIG. 13. In Embodiment 13, the plurality of RS resources are used for obtaining channel measurement for calculating the first CSI report.

As one embodiment, the first CSI report comprises at least one CSI report quantity.

As one embodiment, the first CSI report includes one or more of a CQI, a PMI, a CRI, an LI, an RI, an SSBRI, an L1-RSRP, or an L1-SINR.

As one embodiment, the first CSI report includes the first-type report quantity.

As one embodiment, resource types of the plurality of RS resources are all the first type, and the first CSI report includes the first-type report quantity.

As one embodiment, resource types of the plurality of RS resources are all the first type, and the first CSI report does not include the first-type report quantity.

As one embodiment, resource types of the plurality of RS resources are all the second type, and the first CSI report does not include the first-type report quantity.

As one embodiment, the plurality of RS resources are used for obtaining channel measurement for calculating at least one CSI report quantity included in the first CSI report.

As one embodiment, each RS resource in the plurality of RS resources is used for obtaining channel measurement for calculating the first CSI report.

As one embodiment, only part of RS resources in the plurality of RS resources are used for obtaining channel measurement for calculating the first CSI report.

As one embodiment, the first node obtains channel measurement for calculating the first CSI report only based on the plurality of RS resources.

As one embodiment, the first node obtains channel measurement for calculating the first CSI report only based on each RS resource in the plurality of RS resources.

As one embodiment, the first node obtains channel measurement for calculating the first CSI report only based on part of RS resources in the plurality of RS resources.

### Embodiment 14

Embodiment 14 illustrates a structural block diagram of a processing device used in a first node according to one embodiment of the present application, as shown in FIG. 14. In FIG. 14, a processing device 1400 in the first node comprises a first processor 1401.

In Embodiment 14, the first processor 1401 receives a first information block.

In Embodiment 14, the first information block indicates a plurality of RS resources, and the first information block is carried by higher-layer signaling; the first information block only supports indicating the plurality of RS resources having the same resource type; the resource type of one RS resource is related to at least one of the following:
- whether a cell associated with the RS resource is configured with a first parameter set,
- and a CSI report quantity reported by CSI associated with the RS resource;
the first parameter set is used for determining at least one of a downlink receiving time or an uplink sending time; and a candidate of the CSI report quantity comprises at least one of an L1-RSRP, an L1-SINR, a CRI, an SSBRI, an RI, a PMI, a CQI, or an LI.

As one embodiment, the candidate of the CSI report quantity comprises a first-type report quantity, and the first-type report quantity comprises at least one of the following:
- channel state information recovered by a recipient based on the first-type report quantity received is unknown to the first node;
- a generator for generating the first-type report quantity is obtained based on training;
- and the first-type report quantity does not belong to CSI defined by 3GPP R17 or a previous version of 3GPP R17.

As one embodiment, a resource type of the plurality of RS resources is one of a first type or a second type, a CSI report quantity reported by CSI associated with an RS resource having a resource type of the first type comprises the first-type report quantity, and a CSI report quantity reported by CSI associated with an RS resource having a resource type of the second type does not comprise the first-type report quantity.

As one sub-embodiment of the above embodiment, a CSI report quantity reported by at least one piece of CSI associated with any RS resource having a resource type of the first type comprises the first-type report quantity, and a CSI report quantity reported by each piece of CSI associated with any RS resource having a resource type of the second type does not comprise the first-type report quantity.

As one embodiment, a resource type of the plurality of RS resources is one of a third type or a fourth type, a cell associated with an RS resource having a resource type of the third type is configured with the first parameter set, and a cell associated with an RS resource having a resource type of the fourth type is not configured with the first parameter set.

As one embodiment, the first parameter set is used for determining at least one of a time for monitoring a PDCCH or a time for sending a PUSCH.

As one embodiment, each RS resource in the plurality of RS resources is one RS resource in K RS resources, and K is a positive integer greater than 1; and there are at least two RS resources having different resource types in the K RS resources.

As one sub-embodiment of the above embodiment, each RS resource in the K RS resources is a candidate of an RS resource in the plurality of RS resources.

As one embodiment, the first processor 1401 receives the plurality of RS resources and sends a first CSI report, wherein the plurality of RS resources are used for obtaining channel measurement for calculating the first CSI report.

As one embodiment, the first node device is user equipment.

As one embodiment, the first node device is a relay node device.

As one embodiment, any RS resource in the plurality of RS resources is one CSI-RS resource or one SS/PBCH block resource; a cell associated with one CSI-RS resource refers to: a cell associated with an SS/PBCH block resource for determining a quasi co-location relationship of the one CSI-RS resource; a cell associated with one SS/PBCH block resource refers to a cell identified by a PCI for generating an SS sequence of the one SS/PBCH block resource; and the first parameter set is used for determining a cell inactive time.

As one sub-embodiment of the above embodiment, the plurality of RS resources comprise all RS resources indicated by the first information block.

As one sub-embodiment of the above embodiment, the plurality of RS resources comprise all RS resources indicated by the first information block for channel measurement.

As one embodiment, any RS resource in the plurality of RS resources is one CSI-RS resource or one SS/PBCH block resource; a cell associated with one CSI-RS resource refers to: a cell associated with an SS/PBCH block resource for determining a quasi co-location relationship of the one CSI-RS resource; a cell associated with one SS/PBCH block resource refers to: a cell identified by a PCI used for generating an SS sequence of the one SS/PBCH block resource; and the first parameter set is used for dynamically determining a spatial element.

As one sub-embodiment of the above embodiment, the plurality of RS resources comprise all RS resources indicated by the first information block.

As one sub-embodiment of the above embodiment, the plurality of RS resources comprise all RS resources indicated by the first information block for channel measurement.

As one embodiment, one part of parameters in the first parameter set are used for determining a cell inactive time, and the other part of parameters are used for dynamically determining a spatial element.

As one embodiment, the first processor 1401 comprises at least one of {the antenna 452, the receiving device/transmitting device 454, the receiving processor 456, the transmitting processor 468, the multi-antenna receiving processor 458, the multi-antenna transmitting processor 457, the controller/processor 459, the memory 460, and the data source 467} in Embodiment 4.

### Embodiment 15

Embodiment 15 illustrates a structural block diagram of a processing device in a second node according to one embodiment of the present application, as shown in FIG. 15. In FIG. 15, a processing device 1500 in the second node comprises a second processor 1501.

In Embodiment 15, the second processor 1501 sends a first information block.

In Embodiment 15, the first information block indicates a plurality of RS resources, and the first information block is carried by higher-layer signaling; the first information block only supports indicating the plurality of RS resources having the same resource type; the resource type of one RS resource is related to at least one of the following:
- whether a cell associated with the RS resource is configured with a first parameter set,
- and a CSI report quantity reported by CSI associated with the RS resource;
the first parameter set is used for determining at least one of a downlink receiving time or an uplink sending time; and a candidate of the CSI report quantity comprises at least one of an L1-RSRP, an L1-SINR, a CRI, an SSBRI, an RI, a PMI, a CQI, or an LI.

As one embodiment, the candidate of the CSI report quantity comprises a first-type report quantity, and the first-type report quantity comprises at least one of the following:
- channel state information recovered by a recipient based on the first-type report quantity received is unknown to a sender;
- a generator for generating the first-type report quantity is obtained based on training;
- and the first-type report quantity does not belong to CSI defined by 3GPP R17 or a previous version of 3GPP R17.

As one embodiment, the recipient refers to: the second node.

As one embodiment, the sender refers to: a sender of the first-type report quantity.

As one embodiment, the sender refers to: a sender of the CSI report quantity.

As one embodiment, the sender refers to: the first node.

As one embodiment, a resource type of the plurality of RS resources is one of a first type or a second type, a CSI report quantity reported by CSI associated with an RS resource having a resource type of the first type comprises the first-type report quantity, and a CSI report quantity reported by CSI associated with an RS resource having a resource type of the second type does not comprise the first-type report quantity.

As one sub-embodiment of the above embodiment, a CSI report quantity reported by at least one piece of CSI associated with any RS resource having a resource type of the first type comprises the first-type report quantity, and a CSI report quantity reported by each piece of CSI associated with any RS resource having a resource type of the second type does not comprise the first-type report quantity.

As one embodiment, a resource type of the plurality of RS resources is one of a third type or a fourth type, a cell associated with an RS resource having a resource type of the third type is configured with the first parameter set, and a cell associated with an RS resource having a resource type of the fourth type is not configured with the first parameter set.

As one embodiment, the first parameter set is used for determining at least one of a time for monitoring a PDCCH or a time for sending a PUSCH.

As one embodiment, each RS resource in the plurality of RS resources is one RS resource in K RS resources, and K is a positive integer greater than 1; and there are at least two RS resources having different resource types in the K RS resources.

As one sub-embodiment of the above embodiment, each RS resource in the K RS resources is a candidate of an RS resource in the plurality of RS resources.

As one embodiment, the second processor 1501 receives a first CSI report, wherein the plurality of RS resources are used for obtaining channel measurement for calculating the first CSI report.

As one embodiment, the second processor 1501 sends an RS in at least one RS resource in the plurality of RS resources.

As one embodiment, the second node is a base station device.

As one embodiment, the second node is user equipment.

As one embodiment, the second node is a relay node device.

As one embodiment, any RS resource in the plurality of RS resources is one CSI-RS resource or one SS/PBCH block resource; a cell associated with one CSI-RS resource refers to: a cell associated with an SS/PBCH block resource for determining a quasi co-location relationship of the one CSI-RS resource; a cell associated with one SS/PBCH block resource refers to a cell identified by a PCI for generating an SS sequence of the one SS/PBCH block resource; and the first parameter set is used for determining a cell inactive time.

As one sub-embodiment of the above embodiment, the plurality of RS resources comprise all RS resources indicated by the first information block.

As one sub-embodiment of the above embodiment, the plurality of RS resources comprise all RS resources indicated by the first information block for channel measurement.

As one embodiment, any RS resource in the plurality of RS resources is one CSI-RS resource or one SS/PBCH block resource; a cell associated with one CSI-RS resource refers to: a cell associated with an SS/PBCH block resource for determining a quasi co-location relationship of the one CSI-RS resource; a cell associated with one SS/PBCH block resource refers to: a cell identified by a PCI used for generating an SS sequence of the one SS/PBCH block resource; and the first parameter set is used for dynamically determining a spatial element.

As one sub-embodiment of the above embodiment, the plurality of RS resources comprise all RS resources indicated by the first information block.

As one sub-embodiment of the above embodiment, the plurality of RS resources comprise all RS resources indicated by the first information block for channel measurement.

As one embodiment, one part of parameters in the first parameter set are used for determining a cell inactive time, and the other part of parameters are used for dynamically determining a spatial element.

As one embodiment, the second processor 1501 comprises at least one of {the antenna 420, the receiving device/transmitting device 418, the receiving processor 470, the transmitting processor 416, the multi-antenna receiving processor 472, the multi-antenna transmitting processor 471, the controller/processor 475, and the memory 476} in Embodiment 4.

Those ordinarily skilled in the art can understand that all or part of the steps in the above method can be completed by instructing relevant hardware through a program, and the program can be stored in a computer-readable storage medium, such as a read-only memory, a hard disk or an optical disk, etc. Optionally, all or part of the steps in the above embodiments can also be implemented using one or more integrated circuits. Correspondingly, each module unit in the above embodiments can be implemented in the form of hardware or in the form of a software function module. The present application is not limited to any specific form of software and hardware combination. The user equipment, the terminal and the UE in the present application include but are not limited to drones, communication modules on the drones, remote-controlled airplanes, aircrafts, small airplanes, mobile phones, tablet computers, notebook computers, vehicle-mounted communication devices, transportation vehicles, vehicles, RSUs, wireless sensors, Internet cards, Internet of Things terminals, RFID terminals, NB-IOT terminals, MTC (Machine Type Communication) terminals, eMTC (enhanced MTC) terminals, data cards, Internet cards, vehicle-mounted communication devices, low-cost mobile phones, low-cost tablet computers, and other wireless communication devices. The base station or the system device in the present application includes but is not limited to a macro cell base station, a micro cell base station, a small cell base station, a femtocell, a relay base station, an eNB, a gNB, a TRP (Transmitter Receiver Point), a GNSS, a relay satellite, a satellite base station, an aerial base station, an RSU (Road Side Unit), a drone, a test device such as a transceiver or a signaling tester that simulates some functions of the base station, and other wireless communication devices.

Those skilled in the art should understand that the present invention can be implemented in other specified forms without departing from the core or basic features thereof. Therefore, the embodiments disclosed at present should be regarded as descriptive rather than restrictive in any way. The scope of the present invention is determined by the appended claims rather than the previous description, and all changes within their equivalent meanings and areas are deemed to be included therein.

## Claims

1. A first node for wireless communication, comprising:
a first processor receiving a first information block, the first information block indicating a plurality of RS resources, and the first information block being carried by higher-layer signaling,
wherein the first information block only supports indicating the plurality of RS resources having the same resource type; the resource type of one RS resource is related to at least one of the following:
- whether a cell associated with the RS resource is configured with a first parameter set,
- and a CSI report quantity reported by CSI associated with the RS resource;
the first parameter set is used for determining at least one of a downlink receiving time or an uplink sending time; and a candidate of the CSI report quantity comprises at least one of an L1-RSRP, an L1-SINR, a CRI, an SSBRI, an RI, a PMI, a CQI, or an LI.

2. The first node according to claim 1, wherein the candidate of the CSI report quantity comprises a first-type report quantity, and the first-type report quantity comprises at least one of the following:
- channel state information recovered by a recipient based on the first-type report quantity received is unknown to the first node;
- a generator for generating the first-type report quantity is obtained based on training;
- and the first-type report quantity does not belong to CSI defined by 3GPP R17 or a previous version of 3GPP R17.

3. The first node according to claim 2, wherein a resource type of the plurality of RS resources is one of a first type or a second type, a CSI report quantity reported by CSI associated with an RS resource having a resource type of the first type comprises the first-type report quantity, and a CSI report quantity reported by CSI associated with an RS resource having a resource type of the second type does not comprise the first-type report quantity.

4. The first node according to any one of claims 1 to 3, wherein the resource type of the plurality of RS resources is one of a third type or a fourth type, a cell associated with an RS resource having a resource type of the third type is configured with the first parameter set, and a cell associated with an RS resource having a resource type of the fourth type is not configured with the first parameter set.

5. The first node according to any one of claims 1 to 4, wherein the first parameter set is used for determining at least one of a time for monitoring a PDCCH or a time for sending a PUSCH.

6. The first node according to any one of claims 1 to 5, wherein each RS resource in the plurality of RS resources is one RS resource in K RS resources, and K is a positive integer greater than 1; and in the K RS resources there are at least two RS resources having different resource types.

7. The first node according to any one of claims 1 to 6, wherein the first processor receives the plurality of RS resources and sends a first CSI report, wherein the plurality of RS resources are used for obtaining channel measurement for calculating the first CSI report.

8. A second node for wireless communication, comprising:
a second processor sending a first information block, the first information block indicating a plurality of RS resources, and the first information block being carried by higher-layer signaling,
wherein the first information block only supports indicating the plurality of RS resources having the same resource type; the resource type of one RS resource is related to at least one of the following:
- whether a cell associated with the RS resource is configured with a first parameter set,
- and a CSI report quantity reported by CSI associated with the RS resource;
the first parameter set is used for determining at least one of a downlink receiving time or an uplink sending time; and a candidate of the CSI report quantity comprises at least one of an L1-RSRP, an L1-SINR, a CRI, an SSBRI, an RI, a PMI, a CQI, or an LI.

9. The second node according to claim 8, wherein the candidate of the CSI report quantity comprises a first-type report quantity, and the first-type report quantity comprises at least one of the following:
- channel state information recovered by a recipient based on the first-type report quantity received is unknown to a sender;
- a generator for generating the first-type report quantity is obtained based on training;
- and the first-type report quantity does not belong to CSI defined by 3GPP R17 or a previous version of 3GPP R17.

10. The second node according to claim 9, wherein a resource type of the plurality of RS resources is one of a first type or a second type, a CSI report quantity reported by CSI associated with an RS resource having a resource type of the first type comprises the first-type report quantity, and a CSI report quantity reported by CSI associated with an RS resource having a resource type of the second type does not comprise the first-type report quantity.

11. The second node according to any one of claims 8 to 10, wherein the resource type of the plurality of RS resources is one of a third type or a fourth type, a cell associated with an RS resource having a resource type of the third type is configured with the first parameter set, and a cell associated with an RS resource having a resource type of the fourth type is not configured with the first parameter set.

12. The second node according to any one of claims 8 to 11, wherein the first parameter set is used for determining at least one of a time for monitoring a PDCCH or a time for sending a PUSCH.

13. The second node according to any one of claims 8 to 12, wherein each RS resource in the plurality of RS resources is one RS resource in K RS resources, and K is a positive integer greater than 1, and in the K RS resources there are at least two RS resources having different resource types.

14. The method according to any one of claims 8 to 13, wherein the second processor receives a first CSI report, wherein the plurality of RS resources are used for obtaining channel measurement for calculating the first CSI report.

15. A method used in a first node for wireless communication, comprising:
receiving a first information block, the first information block indicating a plurality of RS resources, and the first information block being carried by higher-layer signaling,
wherein the first information block only supports indicating the plurality of RS resources having the same resource type; the resource type of one RS resource is related to at least one of the following:
- whether a cell associated with the RS resource is configured with a first parameter set,
- and a CSI report quantity reported by CSI associated with the RS resource;
the first parameter set is used for determining at least one of a downlink receiving time or an uplink sending time; and a candidate of the CSI report quantity comprises at least one of an L1-RSRP, an L1-SINR, a CRI, an SSBRI, an RI, a PMI, a CQI, or an LI.

16. The method according to claim 15, wherein the candidate of the CSI report quantity comprises a first-type report quantity, and the first-type report quantity comprises at least one of the following:
- channel state information recovered by a recipient based on the first-type report quantity received is unknown to the first node;
- a generator for generating the first-type report quantity is obtained based on training;
- and the first-type report quantity does not belong to CSI defined by 3GPP R17 or a previous version of 3GPP R17.

17. The method according to claim 16, wherein a resource type of the plurality of RS resources is one of a first type or a second type, a CSI report quantity reported by CSI associated with an RS resource having a resource type of the first type comprises the first-type report quantity, and a CSI report quantity reported by CSI associated with an RS resource having a resource type of the second type does not comprise the first-type report quantity.

18. The method according to any one of claims 15 to 17, wherein the resource type of the plurality of RS resources is one of a third type or a fourth type, a cell associated with an RS resource having a resource type of the third type is configured with the first parameter set, and a cell associated with an RS resource having a resource type of the fourth type is not configured with the first parameter set.

19. The method according to any one of claims 15 to 18, wherein the first parameter set is used for determining at least one of a time for monitoring a PDCCH or a time for sending a PUSCH.

20. The method according to any one of claims 15 to 19, wherein each RS resource in the plurality of RS resources is one RS resource in K RS resources, and K is a positive integer greater than 1; and in the K RS resources there are at least two RS resources having different resource types.

21. The method according to any one of claims 15 to 20, comprising:
receiving the plurality of RS resources;
and sending a first CSI report,
wherein the plurality of RS resources are used for obtaining channel measurement for calculating the first CSI report.

22. A method used in a second node for wireless communication, comprising:
sending a first information block, the first information block indicating a plurality of RS resources, and the first information block being carried by higher-layer signaling,
wherein the first information block only supports indicating the plurality of RS resources having the same resource type; the resource type of one RS resource is related to at least one of the following:
- whether a cell associated with the RS resource is configured with a first parameter set,
- and a CSI report quantity reported by CSI associated with the RS resource;
the first parameter set is used for determining at least one of a downlink receiving time or an uplink sending time; and a candidate of the CSI report quantity comprises at least one of an L1-RSRP, an L1-SINR, a CRI, an SSBRI, an RI, a PMI, a CQI, or an LI.

23. The method according to claim 22, wherein the candidate of the CSI report quantity comprises a first-type report quantity, and the first-type report quantity comprises at least one of the following:
- channel state information recovered by a recipient based on the first-type report quantity received is unknown to a sender;
- a generator for generating the first-type report quantity is obtained based on training;
- and the first-type report quantity does not belong to CSI defined by 3GPP R17 or a previous version of 3GPP R17.

24. The method according to claim 23, wherein a resource type of the plurality of RS resources is one of a first type or a second type, a CSI report quantity reported by CSI associated with an RS resource having a resource type of the first type comprises the first-type report quantity, and a CSI report quantity reported by CSI associated with an RS resource having a resource type of the second type does not comprise the first-type report quantity.

25. The method according to any one of claims 22 to 24, wherein the resource type of the plurality of RS resources is one of a third type or a fourth type, a cell associated with an RS resource having a resource type of the third type is configured with the first parameter set, and a cell associated with an RS resource having a resource type of the fourth type is not configured with the first parameter set.

26. The method according to any one of claims 22 to 25, wherein the first parameter set is used for determining at least one of a time for monitoring a PDCCH or a time for sending a PUSCH.

27. The method according to any one of claims 22 to 26, wherein each RS resource in the plurality of RS resources is one RS resource in K RS resources, and K is a positive integer greater than 1; and in the K RS resources there are at least two RS resources having different resource types.

28. The method according to any one of claims 22 to 27, comprising:
receiving a first CSI report,
wherein the plurality of RS resources are used for obtaining channel measurement for calculating the first CSI report.
